# EUROPEAN PATENT SPECIFICATION

(11) **EP 3 771 112 B1**
(45) Date of publication and mention of the grant of the patent: **01.11.2023**
(21) Application number: 19770661.7
(22) Date of filing: 19.03.2019
(51) Int. Cl.: H04B 1/40, H04B 17/11, H04B 17/21

(54) **METHOD AND APPARATUS FOR CALIBRATING TRANSCEIVER, RECEIVING CHANNEL, AND TRANSMITTING CHANNEL**
VERFAHREN UND VORRICHTUNG ZUR KALIBRIERUNG EINES SENDEEMPFÄNGERS, EMPFANGSKANALS UND SENDEKANAL
PROCÉDÉ ET APPAREIL D'ÉTALONNAGE D'ÉMETTEUR-RÉCEPTEUR, CANAL DE RÉCEPTION ET CANAL DE TRANSMISSION

(30) Priority: 23.03.2018 CN 201810245894
(43) Date of publication of application: 27.01.2021
(73) Proprietor: ZTE Corporation, Shenzhen, Guangdong 518057 (CN)
(72) Inventor: DUAN, Yajuan, Shenzhen, Guangdong 518057 (CN); LI, Xiangling, Shenzhen, Guangdong 518057 (CN)
(74) Representative: Brunazzi, Stefano
(86) International application number: PCT/CN2019/078688
(87) International publication number: WO 2019/179429

(56) References cited:
- EP-A1- 3 255 799
- CN-A- 106 953 658
- CN-A- 106 953 658
- CN-U- 206 060 751
- CN-U- 207 251 614
- CN-Y- 201 323 660
- CN-Y- 201 323 660
- US-A1- 2017 026 938

## Description

### Technical Field

The disclosure relates to the field of communications, and in particular to a transceiver, a method and apparatus for calibrating a receiving channel and a transmitting channel, a signal transceiving system, a storage medium and an electronic apparatus.

### Background

The 5th Generation mobile communication technologies (5G) are pushed forward to cope with high-traffic requirements, and include a variety of novel technologies. Among the technologies, Millimeter Wave (mmW), beam forming, and Massive Multiple Input Multiple Output (MIMO) serve as important technologies in the 5G. To implement these technologies, a variety of implementation manners, such as digital beam forming, analog beam forming and digital-analog hybrid beam forming, have been proposed for a hardware link of a base station. In view of the cost, size and traffic acceleration, the hybrid beam forming serves as a solution suitable to be applied to the 5G base station (for example, the 5G mmW base station; hereinafter, the case where the signal is an mmW signal is used as an example for description).

A basic structure for the hybrid beam forming is described as follows. Multiple paths of digital channels are used as the Massive MIMO. After each path of digital channel is subjected to frequency conversion, the power for an mmW frequency band is divided into multiple paths, each of which is provided with amplitude and phase adjustment functions to adjust an amplitude and a phase of an antenna unit, thereby forming a multi-antenna combined beam.

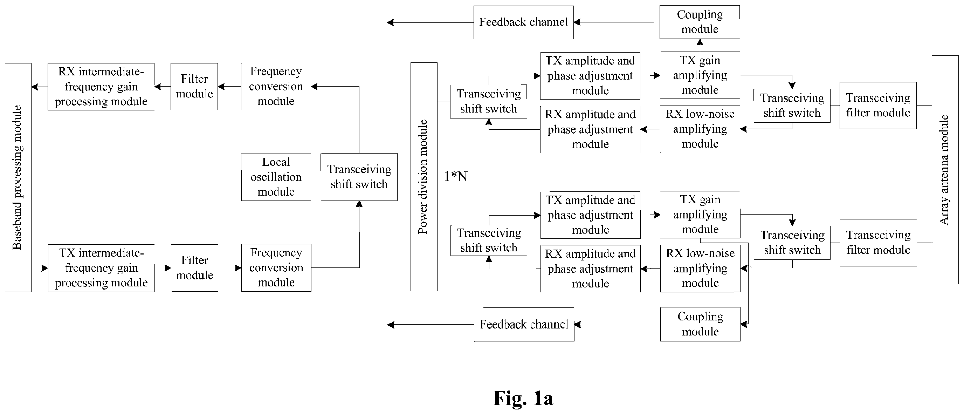

In the hybrid beam forming implementation solutions of the related art, a transceiver based on an integrated antenna technology is as illustrated in Fig. 1a. The mmW transceiver of the related art, however, has the following problems.

The transceiver calibration solution in the solution of the related art is to calibrate a power on a coupling portion of a Power Amplifier (PA). As a result, the PA portion has very complicated links, and occupies a large area which is totally unmatched with the small size of the antenna. Consequently, a Printed Circuit Board (PCB) is large in area, and the layout of the PCB is difficult to be designed.

Concerning the above-mentioned problems in the related art, effective solutions have not yet been proposed.

The Chinese patent document CN 201 323 660 Y relates to a remote radio frequency unit of electric regulating antenna and electric regulating antenna integrating the remote radio frequency unit.

The Chinese patent application CN 106 953 658 A discloses an active phased array transmitting-receiving component with high integration density.

The European patent application EP 3 255 799 A1 describes a method and system for reducing distortions in amplified signals radiated by a multiple antenna system.

The above mentioned patent documents provide related technical solutions; however, the above mentioned problem still remains unsolved.

### Summary

Embodiments of the disclosure provide a transceiver, a method and apparatus for calibrating a receiving channel and a transmitting channel, a signal transceiving system, a storage medium and an electronic apparatus, which may at least solve the problem in the related art that the channel calibration portion has complicated links and occupies a large area.

The present disclosure is defined by the appended claims.

### Brief Description of the Drawings

Fig. 1a is a schematic diagram of a transceiver based on an integrated antenna technology in the related art.
Fig. 1b is a schematic diagram of an image position when IF=2.25 GHz.
Fig. 2 is a structural block diagram of a transceiver according to an embodiment of the disclosure.
Fig. 3 is a structural block diagram of a transceiving front-end processing module according to an embodiment of the disclosure.
Fig. 4 is an overall structural schematic diagram of a transceiver according to an embodiment of the disclosure.
Fig. 5 is a structural block diagram of a receiving intermediate-frequency processing, filtration and frequency-conversion module according to an embodiment of the disclosure.
Fig. 6 is a structural block diagram of a transmitting intermediate-frequency processing, filtration and frequency-conversion module according to an embodiment of the disclosure.
Fig. 7 is a flowchart of a method for calibrating a receiving channel according to an embodiment of the disclosure.
Fig. 8 is an exemplary flowchart for calibration of a receiving channel according to an embodiment of the disclosure.
Fig. 9 is a schematic diagram of an antenna according to an embodiment of the disclosure.
Fig. 10 is a flowchart of a method for calibrating a transmitting channel according to an embodiment of the disclosure.
Fig. 11 is a flowchart of multi-path phase synchronous calibration of a transmitting channel according to an embodiment of the disclosure.
Fig. 12 is a flowchart for signal transmission according to an embodiment of the disclosure.
Fig. 13 is a flowchart for signal reception according to an embodiment of the disclosure.
Fig. 14 is a schematic diagram of a single polarized implementation solution based on a 4*4 array according to an embodiment of the disclosure.
Fig. 15 is a flowchart for transmitting signal processing in a single polarized implementation solution based on a 4*4 array according to an embodiment of the disclosure.
Fig. 16 is a flowchart for receiving signal processing in a single polarized implementation solution based on a 4*4 array according to an embodiment of the disclosure.
Fig. 17 is a flowchart for transmitting phase calibration in a single polarized implementation solution based on a 4*4 array according to an embodiment of the disclosure.
Fig. 18 is a flowchart for receiving phase calibration in a single polarized implementation solution based on a 4*4 array according to an embodiment of the disclosure.
Fig. 19 is a schematic diagram of a dual-polarized implementation solution based on a 4*4 array according to an embodiment of the disclosure.
Fig. 20 is a flowchart for transmitting phase calibration in a dual-polarized implementation solution based on a 4*4 array according to an embodiment of the disclosure.
Fig. 21 is a schematic diagram of beam forming in a dual-polarized implementation solution based on a 4*8 array according to an embodiment of the disclosure.
Fig. 22 is a flowchart for phase calibration in a dual-polarized implementation solution based on a 4*8 array according to an embodiment of the disclosure.
Fig. 23 is a schematic diagram of high-power output in a dual-polarized implementation solution based on a 4*8 array according to an embodiment of the disclosure.
Fig. 24 is a flowchart of dual-polarized high-power output based on a 4*4 array according to an embodiment of the disclosure.
Fig. 25 is a structural block diagram of an apparatus for calibrating a receiving channel according to an embodiment of the disclosure.
Fig. 26 is a structural block diagram of an apparatus for calibrating a transmitting channel according to an embodiment of the disclosure.

### Detailed Description of the Embodiments

### Embodiment 1

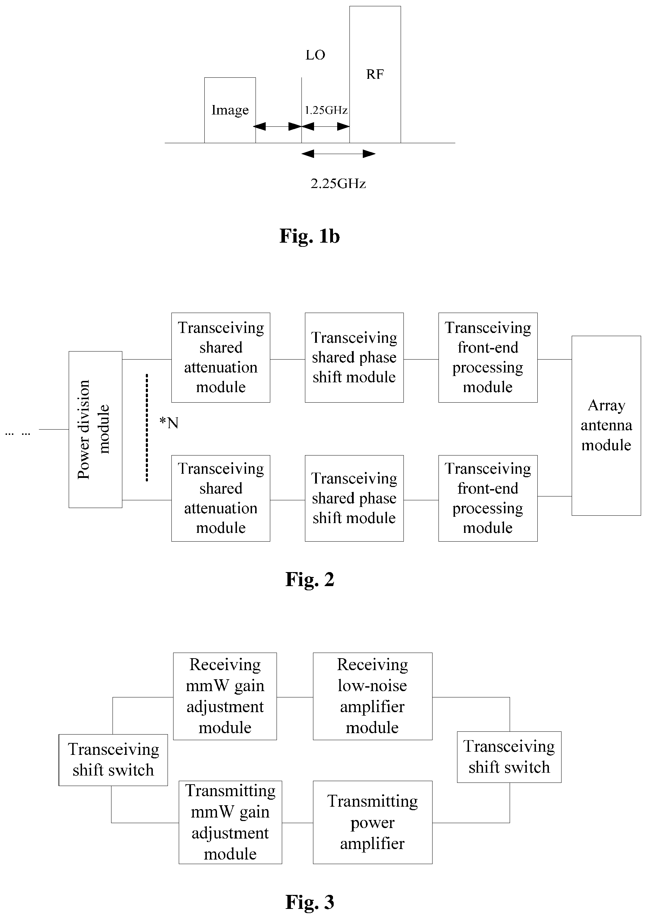

According to one embodiment of the disclosure, a transceiver is provided, which may include a power division module and at least two paths of signal transceiving and processing devices. Each path of signal transceiving and processing device includes a transceiving shared attenuation module, a transceiving shared phase shift module and a transceiving front-end processing module. The transceiving shared attenuation module is connected to the power division module, and is configured to attenuate a received or to-be-transmitted signal. The transceiving shared phase shift module is connected to the transceiving shared attenuation module, and is configured to adjust a phase of the received or to-be-transmitted signal. One end of the transceiving front-end processing module is connected to the transceiving shared phase shift module, and the other end of the transceiving front-end processing module is configured to be connected to an antenna for receiving or transmitting a signal. The exemplary structure for the transceiver may refer to Fig. 2.

The above power division module may be the power division module in the related art, and perform power division on the received or to-be-transmitted signal to form multiple paths of signals to simulate beam forming. In the above transceiving shared attenuation module, the attenuation is big-step attenuation, with an amount of attenuation greater than an isolation degree between antenna oscillators. The attenuation meets requirements on indexes for implementing the beam forming, and on calibration of phases between multiple paths of transceiving front-end processing modules, and gain attenuation is performed when blocking a large signal during receiving so as to protect the device. In the above transceiving shared phase shift module, the phase adjustment required by the beam forming is implemented, and the phase difference between multiple channels of same chips or different chips is compensated. Hence, the step for the phase adjustment herein needs to be determined according to beam forming indexes of the specific array antenna. To implement transceiving reciprocity, the phase shifter herein is suggested to adopt a passive structure. The above transceiving front-end processing module may be the transceiving front-end processing module in the related art. The exemplary structure of the module may refer to Fig. 3. The module is configured to perform low-noise amplification on the signal (such as the mmW signal) received by the antenna, and adjust a gain required by the beam forming of the receiving antenna, and simultaneously perform power amplification on the to-be-transmitted signal (such as the mmW signal), and adjust a gain required by the beam forming of the transmitting antenna. As shown in Fig. 3, the transceiving front-end processing module includes modules which are described as follows.

A first transceiving shift switch is configured to implement transceiving time division switching in an mmW frequency band. A receiving mmW gain adjustment module is configured to implement receiving gain adjustment required by the beam forming, and compensate a receiving gain error between multiple channels of same chips or different chips. A receiving low-noise amplifier module is configured to implement low-noise amplification on the received signal. A second transceiving shift switch is configured to implement the transceiving time division switching in the mmW frequency band. Both the first transceiving shift switch and the second transceiving shift switch are switched at the same time to implement transceiving time division, and may share the same control line. A transmitting mmW gain adjustment module is configured to implement transmitting gain adjustment required by the beam forming, and compensate a transmitting gain error between multiple channels of same chips or different chips. A transmitting power amplifier is configured to amplify the signal to a power of the antenna to meet the system requirement.

The above embodiment also involves an antenna. The antenna may be connected to the transceiving front-end processing module. The antenna may be an array antenna module, and is configured to receive and transmit the signal (such as the mmW signal).

By means of the above embodiment, the transceiving shared attenuation module and the transceiving shared phase shift module are introduced in the transceiver. Signal calibration can be implemented via the transceiving shared attenuation module and transceiving shared phase shift module without the necessity of using a feedback channel for calibration, i.e., the complicated calibration structure of the related art does not need to be used. By virtue of the solution, the complexity for the links of the PA portion is effectively reduced, and the area occupied by the calibration device on the PCB is reduced, thereby solving the problem in the related art that the channel calibration portion has complicated links and occupies a large area.

In addition, it is further to be noted that the transceiving phase shifter is implemented by the use of an active modulator in the transceiver of the related art and cannot realize the reciprocity, such that the phase shifter must be respectively placed on the receiving and transmitting channels, therefore a large area of the PCB needs to be occupied. However, in the embodiment of the disclosure, with the structure of the transceiving shared phase shifter, the phase shifter is unnecessarily placed on the receiving and transmitting channels to effectively reduce the occupied area.

In an exemplary embodiment, the transceiver further includes a receiving intermediate-frequency processing, filtration and frequency-conversion module, a transmitting intermediate-frequency processing, filtration and frequency-conversion module, a local oscillation module, a transceiving shift switch, and a transceiving shared filtration module. The receiving intermediate-frequency processing, filtration and frequency-conversion module is configured to be connected to a baseband processing module. The transmitting intermediate-frequency processing, filtration and frequency-conversion module is configured to be connected to the baseband processing module. The local oscillation module is connected to the receiving intermediate-frequency processing, filtration and frequency-conversion module and the transmitting intermediate-frequency processing, filtration and frequency-conversion module. The transceiving shift switch is connected to the receiving intermediate-frequency processing, filtration and frequency-conversion module and the transmitting intermediate-frequency processing, filtration and frequency-conversion module. One end of the transceiving shared filtration module is connected to the transceiving shift switch, and the other end of the transceiving shared filtration module is connected to the power division module.

It is further to be noted that as the maximum sampling rate of a Radio-Frequency Analog-to-Digital Converter (RFADC) in the transceiver of the related art is 3 GHz, the output intermediate frequency cannot be too high and therefore only 2.25 GHz or lower frequency band can be selected. As a result, the high-frequency signal in the solution of the related art is converted to the 2.25 GHz frequency band. Since the bandwidth of the high frequency is about 1 GHz, the image signal is too close to the main signal. As shown in Fig. 1b, the image edge is 2.5 GHz away from the main signal and this relative distance, when being considered in a range of 28 GHz, is only 10% of 28 GHz, such that it is very hard to implement filtration, the size is very large, and the anti-interference performance of the air interface cannot be ensured. The current solution is to use a multi-order filter cascading manner, which results in a large gain loss. The gain of the link is compensated by using more amplifiers, such that the size of the entire device is increased. The flatness deteriorates seriously after the filter is cascaded, which results in poor indexes of Error Vector Magnitude (EVM) of the entire device. In the embodiment of the disclosure, both the receiving intermediate-frequency processing, filtration and frequency-conversion module and the transmitting intermediate-frequency processing, filtration and frequency-conversion module use the two-level frequency conversion structure, and are implemented by a demodulator, thereby reducing the implementation difficulty of the filtration module. The descriptions are made hereinafter.

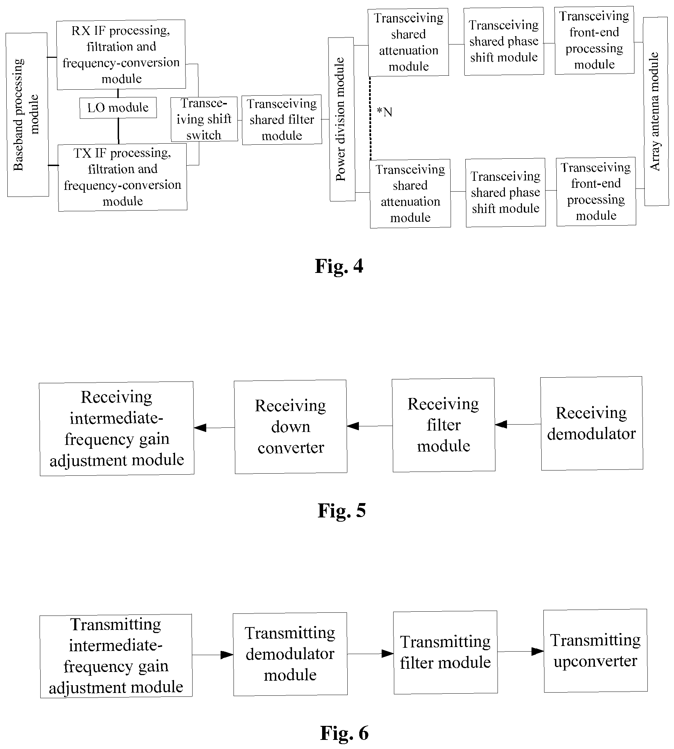

In the embodiment, the receiving intermediate-frequency processing, filtration and frequency-conversion module is configured to implement gain processing for converting the received signal (such as the mmW signal) into an intermediate-frequency signal, the gain processing including gain amplification and attenuation, intermediate-frequency signal filtration, and frequency conversion. The transmitting intermediate-frequency processing, filtration and frequency-conversion module is configured to implement gain processing from the intermediate-frequency signal to the mmW signal (in the disclosure, the mmW signal is used as the example for description and will not be elaborated hereinafter), the gain processing including the gain amplification and attenuation, intermediate-frequency signal filtration, and frequency conversion. The local oscillation module is configured to provide a local oscillation signal for frequency conversion portions in the receiving intermediate-frequency processing, filtration and frequency-conversion module and the transmitting intermediate-frequency processing, filtration and frequency-conversion module. The transceiving shift switch is configured to implement transceiving time-division switching. The transceiving shared filtration module is configured as a receiving and transmitting shared mmW filter to conduct blocking filter over an mmW (particularly image stray) after frequency conversion, and filter an interference signal received at an antenna port. The connection relationships between the modules in the embodiment and the foregoing modules (i.e., the power division module and the at least two paths of signal transceiving and processing devices) may refer to Fig. 4.

In an exemplary embodiment, the receiving intermediate-frequency processing, filtration and frequency-conversion module includes a receiving intermediate-frequency gain adjustment module, a receiving down converter, a receiving filter module and a receiving demodulator. The receiving intermediate-frequency gain adjustment module is configured to be connected to the baseband processing module. The receiving down converter is connected to the receiving intermediate-frequency gain adjustment module, and is configured to perform frequency conversion on the received signal from a High Intermediate Frequency (HIF) to a Low Intermediate Frequency (LIF) (local oscillation may be provided via an external component of a chip). The receiving filter module is connected to the receiving down converter. The receiving demodulator is connected to the receiving filter module. In the embodiment, the receiving intermediate-frequency gain adjustment module, the receiving filter module and the receiving demodulator may be the modules included in the receiving intermediate-frequency processing, filtration and frequency-conversion module of the related art. The receiving intermediate-frequency gain adjustment module is configured to implement gain amplification or attenuation for converting the received mmW signal to the LIF. If multiple devices are formed into a larger array antenna, the module is used to adjust the gain error between different devices and channels, and dynamically adjust the gain of the receiving links. The receiving filter module is configured to filter the interference signal received by the antenna or stray generated by internal frequency conversion. The receiving demodulator is configured to implement the frequency conversion from the mmW frequency band to the HIF. The module is implemented by a demodulator, and may improve the capability of image suppression. The connection relationships between the modules in the embodiment may refer to Fig. 5.

In an exemplary embodiment, the transmitting intermediate-frequency processing, filtration and frequency-conversion module includes a transmitting intermediate-frequency gain adjustment module, a transmitting demodulator module, a transmitting filter module and a transmitting upconverter. The transmitting intermediate-frequency gain adjustment module is configured to be connected to the baseband processing module. The transmitting demodulator module is connected to the transmitting intermediate-frequency gain adjustment module, and is configured to perform frequency conversion on the to-be-transmitted signal from an LIF to an HIF. The transmitting demodulator module may be implemented by a demodulator and may improve the capability of image suppression. The transmitting filter module is connected to the transmitting demodulator module. The transmitting upconverter is connected to the transmitting filter module. In the embodiment, the transmitting intermediate-frequency gain adjustment module, the transmitting filter module and the transmitting upconverter may be the modules included in the transmitting intermediate-frequency processing, filtration and frequency-conversion module of the related art. The transmitting intermediate-frequency gain adjustment module is configured to implement gain amplification or attenuation of the LIF signal. If multiple transceivers are formed into a larger array, the module is used to adjust the gain error between different devices and channels, and dynamically adjust the gain of the transmitting links. The transmitting filter module is configured to filter stray generated by the frequency conversion from the LIF to the HIF. The transmitting upconverter is configured to implement the frequency conversion from the HIF to the mmW frequency band. The connection relationships between the modules in the embodiment may refer to Fig. 6.

It is to be noted that the transceiver in the embodiment does not have any limitation on a polarization mode of the antenna. A single polarized antenna may be used. A dual-polarized antenna may also be supported after the number of the transceivers is doubled.

In view of multi-antenna forming requirements, phases of multiple channels should be consistent. A method for calibrating phase consistency between multiple paths is further provided in the embodiment of the disclosure. The traditional calibration method needs the use of a hardware coupling channel at the antenna port for calibration. In the embodiment of the disclosure, the calibration method uses the antenna to conduct self transmitting and self receiving and uses the transceiving shared attenuator of the transceiver provided in the embodiment of the disclosure. In this way, the single-path receiving and transmitting may be implemented without interference from other channels, and thus, there is no need to introduce additional hardware channels.

### Embodiment 2

A method for calibrating a receiving channel is mainly described in the embodiment.

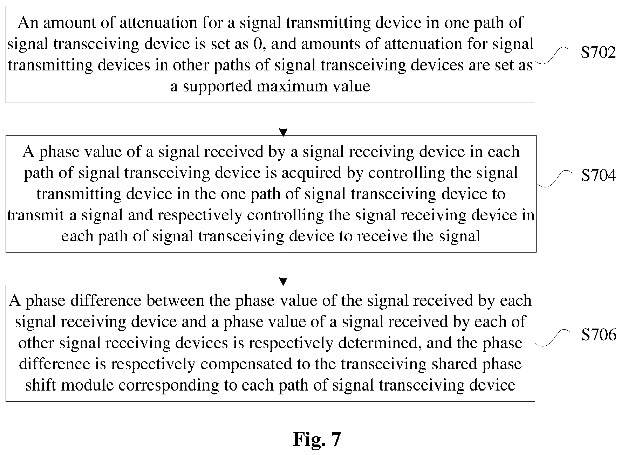

The embodiment provides the method for calibrating the receiving channel. The method may be applied to the transceiver in Embodiment 1. Fig. 7 is a flowchart of a method for calibrating a receiving channel according to an embodiment of the disclosure. As shown in Fig. 7, the method may include the following operations.

At S702, an amount of attenuation for a signal transmitting device in one path of signal transceiving device is set as 0, and amounts of attenuation for signal transmitting devices in other paths of signal transceiving devices are set as a supported maximum value.

At S704, a phase value of a signal received by a signal receiving device in each path of signal transceiving device is acquired by controlling the signal transmitting device in the one path of signal transceiving device to transmit a signal and respectively controlling the signal receiving device in each path of signal transceiving device to receive the signal.

At S706, a phase difference between the phase value of the signal received by each signal receiving device and a phase value of a signal received by each of other signal receiving devices is respectively determined, and the phase difference is respectively compensated to the transceiving shared phase shift module corresponding to each path of signal transceiving device.

The above operations may be implemented by a transceiver.

By means of the above operations, the phase value of the signal received by each receiving device as well as the phase difference between the phase value of the signal received by each signal receiving device and the phase values of the signals received by other signal receiving devices may be acquired by controlling the amounts of attenuation of the signal transceiving device in the transceiver, thereby compensating the phase of the receiving device, and calibrating the receiving channel. With the use of the method in the embodiment, no additional feedback channels are required for calibration, i.e., the complicated calibration structure of the related art does not need to be used. By virtue of the solution, the complexity for the links of the PA portion is effectively reduced, and the area occupied by the calibration device on the PCB is reduced, thereby solving the problem in the related art that the channel calibration portion has complicated links and occupies a large area.

In an exemplary embodiment, the operation that the phase value of the signal received by the signal receiving device in each path of signal transceiving device is acquired by controlling the signal transmitting device in the one path of signal transceiving device to transmit the signal and respectively controlling the signal receiving device in each path of signal transceiving device to receive the signal may include the following operations. The signal transmitting device in the one path of signal transceiving device is controlled to transmit the signal. The following operations are repeatedly executed till phase values of signals received by signal receiving devices in all paths of signal transceiving devices are acquired: an amount of attenuation for a front-end processing module of the signal receiving device in the one path of signal transceiving device is set as 0 to receive the signal, and the phase value of the received signal is recorded; and the amount of attenuation for the front-end processing module of the signal receiving device in the one path of signal transceiving device is set as a supported maximum value, an amount of attenuation for a front-end processing module of a signal receiving device in another path of signal transceiving device except for the one path of signal transceiving device is set as 0 to receive the signal, and the phase value of the received signal is recorded.

The overall process for calibrating the receiving channel is described below in combination with one embodiment.

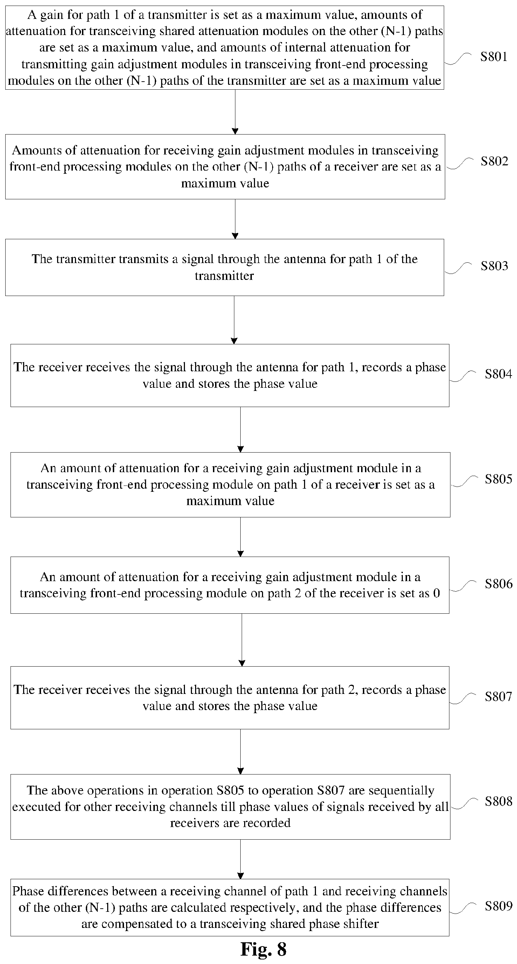

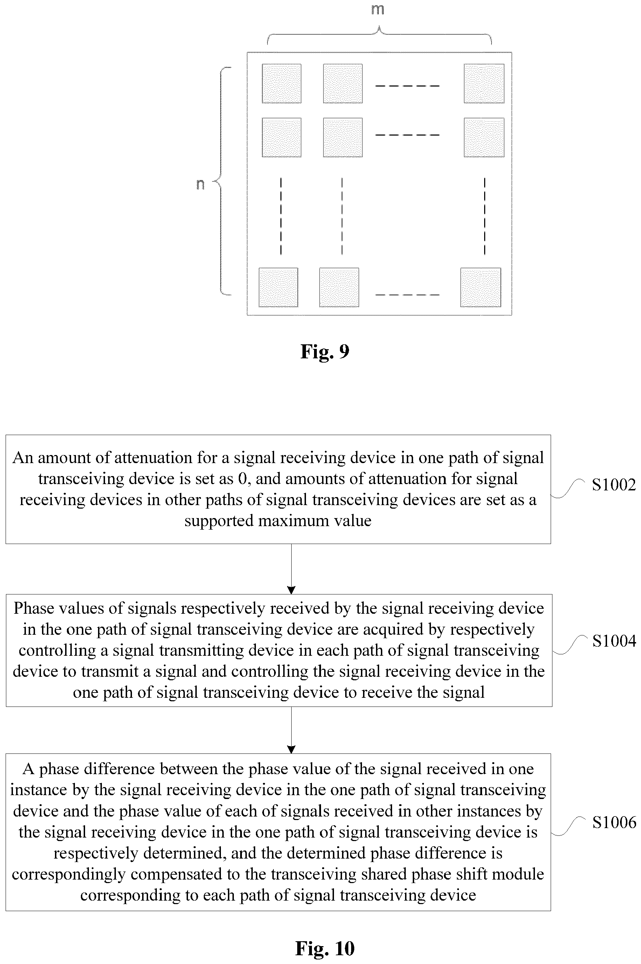

In the embodiment, the process for calibrating the receiving channel is as shown in Fig. 8, the arrangement schematic diagram of the antenna is as shown in Fig. 9, and the process may include the following operations.

At S801: a gain for path 1 (assuming that the path 1 is the 1st path) of a transmitter (corresponding to the above signal transmitting device) is set as a maximum value, amounts of attenuation for transceiving shared attenuation modules on the other (N-1) paths (assuming that the other (N-1) paths are 2nd to (N-1)th paths) are set as a maximum value, amounts of internal attenuation for transmitting gain adjustment modules in transceiving front-end processing modules on the other (N-1) paths of the transmitter are set as a maximum value, and then operation S802 is executed.

At S802: amounts of attenuation for receiving gain adjustment modules in transceiving front-end processing modules on the other (N-1) paths (i.e., the 2nd to (N-1)th paths) of a receiver (corresponding to the above signal receiving device) are set as a maximum value, and then operation S803 is executed.

At S803: the transmitter transmits a signal through the antenna for path 1 of the transmitter, and then operation S804 is executed.

At S804: the receiver receives the signal through the antenna for path 1 (assuming that the path 1 is the 1st path), records a phase value and stores the phase value, and then operation S805 is executed.

At S805: an amount of attenuation for a receiving gain adjustment module in a transceiving front-end processing module on path 1 of a receiver is set as a maximum value, and then operation S806 is executed.

At S806: an amount of attenuation for a receiving gain adjustment module in a transceiving front-end processing module on path 2 (the path 2 is another path except for the path 1, herein the path 2 is assumed to be the 2nd path) of the receiver is set as 0, and then operation S807 is executed.

At S807: the receiver receives the signal through the antenna for path 2 (assuming that the path 2 is the 2nd path), records a phase value and stores the phase value, and then operation S808 is executed.

At S808: the above operations in operation S805 to operation S807 are sequentially executed for other receiving channels till phase values of signals received by all receivers are recorded.

At S809: phase differences between a receiving channel of path 1 and receiving channels of the other (N-1) paths are calculated respectively, and the phase differences are compensated to a transceiving shared phase shifter.

### Embodiment 3

A method for calibrating a transmitting channel is mainly described in the embodiment.

The embodiment provides the method for calibrating the transmitting channel. The method may be applied to the transceiver in Embodiment 1. Fig. 10 is a flowchart of a method for calibrating a transmitting channel according to an embodiment of the disclosure. As shown in Fig. 10, the method may include the following operations.

At S 1002, an amount of attenuation for a signal receiving device in one path of signal transceiving device is set as 0, and amounts of attenuation for signal receiving devices in other paths of signal transceiving devices are set as a supported maximum value.

At S 1004, phase values of signals respectively received by the signal receiving device in the one path of signal transceiving device are acquired by respectively controlling a signal transmitting device in each path of signal transceiving device to transmit a signal and controlling the signal receiving device in the one path of signal transceiving device to receive the signal.

At S 1006, a phase difference between the phase value of the signal received in one instance by the signal receiving device in the one path of signal transceiving device and the phase value of each of signals received in other instances by the signal receiving device in the one path of signal transceiving device is respectively determined, and the determined phase difference is correspondingly compensated to the transceiving shared phase shift module corresponding to each path of signal transceiving device.

The above operations may be implemented by a transceiver.

By means of the above operations, the phase value of the signal received by each transmitting device as well as the phase difference between the phase value of the signal received by each signal transmitting device and the phase values of the signals received by other signal transmitting devices may be acquired by controlling the amounts of attenuation of the signal transceiving device in the transceiver, thereby compensating the phase of the transmitting device, and calibrating the transmitting channel. With the use of the method in the embodiment, no additional feedback channels are required for calibration, i.e., the complicated calibration structure of the related art does not need to be used. By virtue of the solution, the complexity for the links of the PA portion is effectively reduced, and the area occupied by the calibration device on the PCB is reduced, thereby solving the problem in the related art that the channel calibration portion has complicated links and occupies a large area.

In an exemplary embodiment, the operation that the phase values of the signals respectively received by the signal receiving device in the one path of signal transceiving device are acquired by respectively controlling the signal transmitting device in each path of signal transceiving device to transmit the signal and controlling the signal receiving device in the one path of signal transceiving device to receive the signal may include that: an amount of attenuation for a front-end processing module of the signal transmitting device in the one path of signal transceiving device is set as 0 to transmit the signal; and the following operations are repeatedly executed till phase values of all signals respectively received by the signal receiving devices in the one path of signal transceiving device are acquired: the signal receiving device in the one path of signal transceiving device is controlled to receive a signal and the phase value of the received signal is recorded; and the amount of attenuation for the front-end processing module of the signal transmitting device in the one path of signal transceiving device is set as a supported maximum value, an amount of attenuation for a front-end processing module of a signal transmitting device in another path of signal transceiving device except for the one path of signal transceiving device is set as 0 to transmit a signal, the signal receiving device in the one path of signal transceiving device is controlled to receive a signal and the phase value of the received signal is recorded.

The overall process for calibrating the receiving channel is described below in combination with one embodiment.

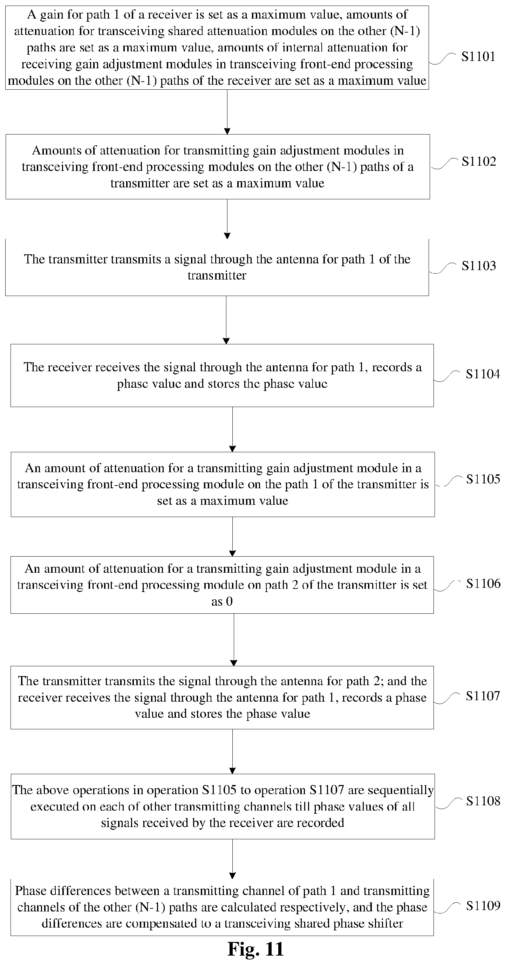

A multi-path phase synchronous calibration process for the transmitting channel in the embodiment of the disclosure is as illustrated in Fig. 11, and may include the following operations.

At S1101: a gain for path 1 (assuming that the path 1 is the 1st path) of a receiver (corresponding to the above signal receiving device) is set as a maximum value, amounts of attenuation for transceiving shared attenuation modules on the other (N-1) paths (assuming that the other (N-1) paths are 2nd to (N-1)th paths) are set as a maximum value, amounts of internal attenuation for receiving gain adjustment modules in transceiving front-end processing modules on the other (N-1) paths of the receiver are set as a maximum value, and then operation S1102 is executed.

At S1102: amounts of attenuation for transmitting gain adjustment modules in transceiving front-end processing modules on the other (N-1) paths (assuming that the other (N-1) paths are the 2nd to (N-1)th paths) of a transmitter (corresponding to the above signal transmitting device) are set as a maximum value, and then operation S1103 is executed.

At S 1103: the transmitter transmits a signal through the antenna for path 1 of the transmitter, and then operation S1104 is executed.

At S 1104: the receiver receives the signal through the antenna for path 1, records a phase value and stores the phase value, and then operation S1105 is executed.

At S1105: an amount of attenuation for a transmitting gain adjustment module in a transceiving front-end processing module on the path 1 of the transmitter is set as a maximum value, and then operation S1106 is executed.

At S1106: an amount of attenuation for a transmitting gain adjustment module in a transceiving front-end processing module on path 2 (the path 2 is another path except for the path 1, herein the path 2 is assumed to be the 2nd path) of the transmitter is set as 0, and then operation S 1107 is executed.

At S 1107: the transmitter transmits the signal through the antenna for path 2; the receiver receives the signal through the antenna for path 1, records a phase value and stores the phase value; and then operation S1108 is executed.

At S1108: the above operations in operation S1105 to operation S1107 are sequentially executed on each of other transmitting channels till phase values of all signals received by the receiver are recorded.

At S 1109: phase differences between a transmitting channel of path 1 and transmitting channels of the other (N-1) paths are calculated respectively, and the phase differences are compensated to a transceiving shared phase shifter.

It is to be noted that the transceiving phase compensation value is shifted in time division in the phase shifter.

### Embodiment 4

In the embodiment, the process that the transceiver transmits the signal and receives the signal in Embodiment 1 is described by taking the case where the signal is the mmW signal as an example.

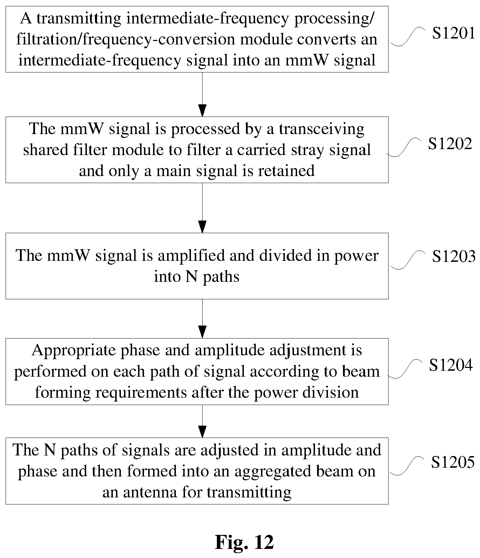

Fig. 12 is a signal transmitting process according to an embodiment of the disclosure. In this case, the receiving and transmitting selector switches are set in a transmitting state. The process may include the following operations.

At S1201: an intermediate-frequency signal is processed by a transmitting intermediate-frequency processing, filtration and frequency-conversion module, such that the intermediate-frequency signal is converted into an mmW signal, and a stray signal and particularly an image signal carried in the intermediate-frequency signal are partially filtered.

At S1202: the mmW signal is processed by a transceiving shared filter module to filter the stray signal carried in the intermediate-frequency signal and only a main signal is retained.

At S1203: the mmW signal is processed by a power division module to perform power division on the mmW signal into N paths.

At S1204: a phase shifter module performs appropriate phase and amplitude adjustment on each path of signal according to beam forming requirements after the power division.

At S1205: a transmitting front-end module performs final high-power amplification on an amplitude adjusted signal, and transmits a signal via an antenna, signals transmitted by N antennas being combined into one beam in the air.

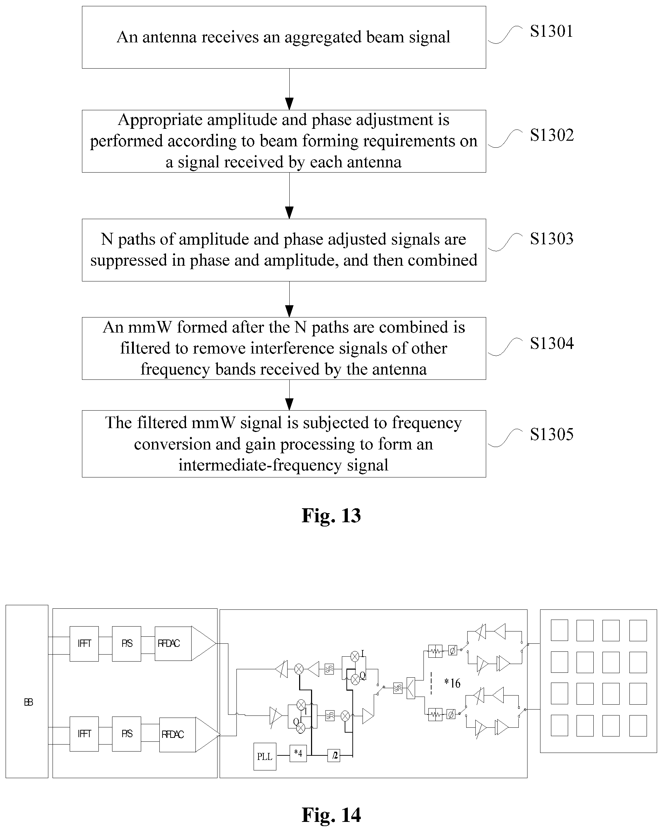

Fig. 13 is a signal receiving process according to an embodiment of the disclosure. In this case, the receiving and transmitting selector switches are set in a receiving state. The process may include the following operations.

At S 1301: each antenna receives a combined beam signal over the air.

At S 1302: according to amplitude and phase requirements of beam forming, corresponding amplitude and phase adjustment is performed on the signal received by each antenna.

At S1303: a signal subjected to amplitude and phase adjustment is combined into one path of mmW signal by a combiner.

At S1304: the mmW signal is filtered, such that interference signals of other frequency bands received by the antenna are removed.

At S 1305: the filtered mmW signal is converted into an intermediate-frequency signal via frequency conversion and gain processing.

The signal transceiving and channel calibration in the disclosure are described below in combination with exemplary embodiments.

### Exemplary embodiment 1

Fig. 14 is a schematic diagram of a single polarized implementation solution based on a 4*4 array according to an exemplary embodiment of the disclosure. Each antenna unit is provided with a feeding port and each antenna unit corresponds to one transceiving channel.

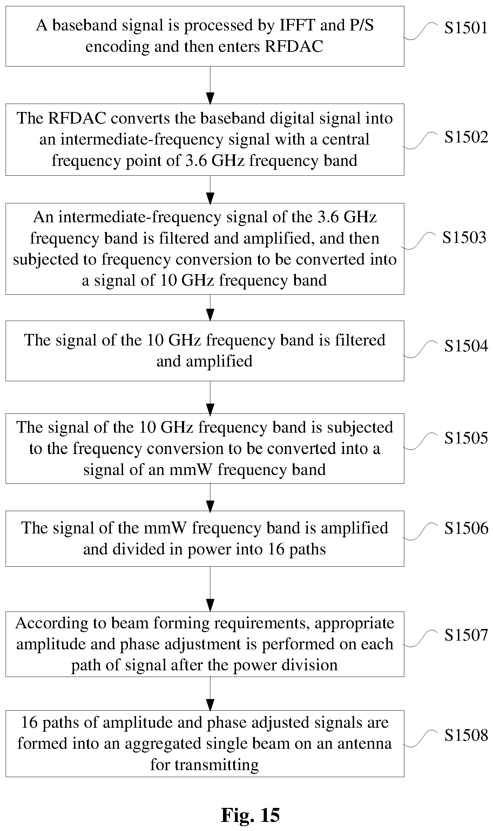

The transmitting (which may also be called sending; in the disclosure, the transmitting and the sending have the same meaning) signal processing process is as illustrated in Fig. 15. In this case, all switches are in a transmitting state, and the process may include the following operations.

At S1501: a baseband signal is processed by Inverse Fast Fourier Transform (IFFT) and Parallel/Serial (P/S) encoding and then enters RFDAC.

At S1502: the RFDAC performs digital-to-analog signal processing on the baseband digital signal and converts the signal into an intermediate-frequency signal with a central frequency point of 3.6 GHz frequency band.

At S1503: an intermediate-frequency signal at the 3.6 GHz frequency point is filtered and amplified, and then subjected to frequency conversion to be converted into a signal a 10 GHz frequency band.

At S1504: the signal of the 10 GHz frequency band is filtered and amplified.

At S1505: the signal of the 10 GHz frequency band is subjected to the frequency conversion to be converted into a signal of a 28 G mmW frequency band.

At S1506: the signal of the mmW frequency band is amplified and divided in power into 16 paths.

At S 1507: according to beam forming requirements, appropriate amplitude and phase adjustment is performed on each path of signal after the power division.

At S1508: 16 paths of amplitude and phase adjusted signals are transmitted over the air via an antenna to form an aggregated single beam for transmitting.

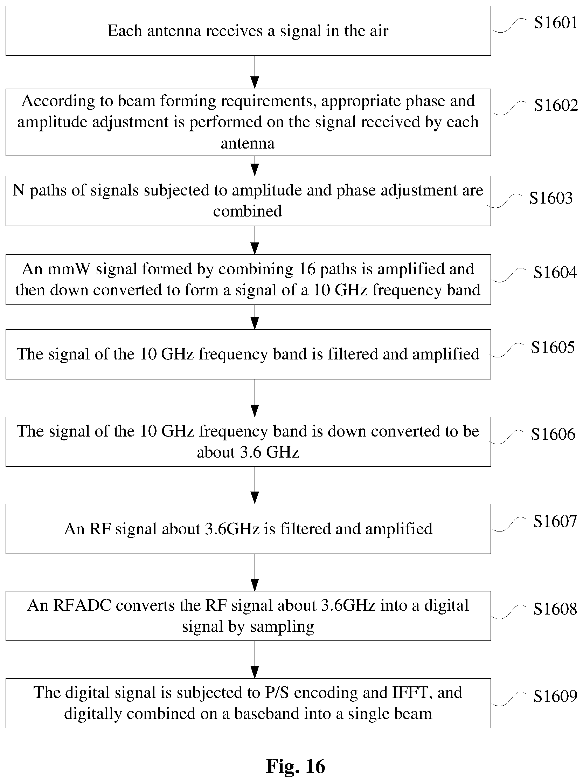

The receiving signal processing process is as illustrated in Fig. 16. In this case, all switches are in a receiving state, and the process may include the following operations.

At S 1601: each antenna receives a receiving signal over the air.

At S 1602: according to beam forming requirements, appropriate phase and amplitude adjustment is performed on the signal received by each antenna.

At S1603: a signal subjected to amplitude and phase adjustment is combined.

At S 1604: an mmW signal formed by combining 16 paths is amplified and then down converted to form a signal of a 10 GHz frequency band.

At S1605: the signal of the 10 GHz frequency band is filtered and amplified.

At S1606: the signal of the 10 GHz frequency band is down converted into a signal of a 3.6 GHz frequency band.

At S1607: the signal of the 3.6GHz frequency band is filtered and amplified.

At S1608: an RFADC converts the signal of the 3.6GHz frequency band into a digital signal through analog-to-digital conversion.

At S 1609: the digital signal is subjected to P/S encoding and IFFT, and digitally combined on a baseband into a single beam signal.

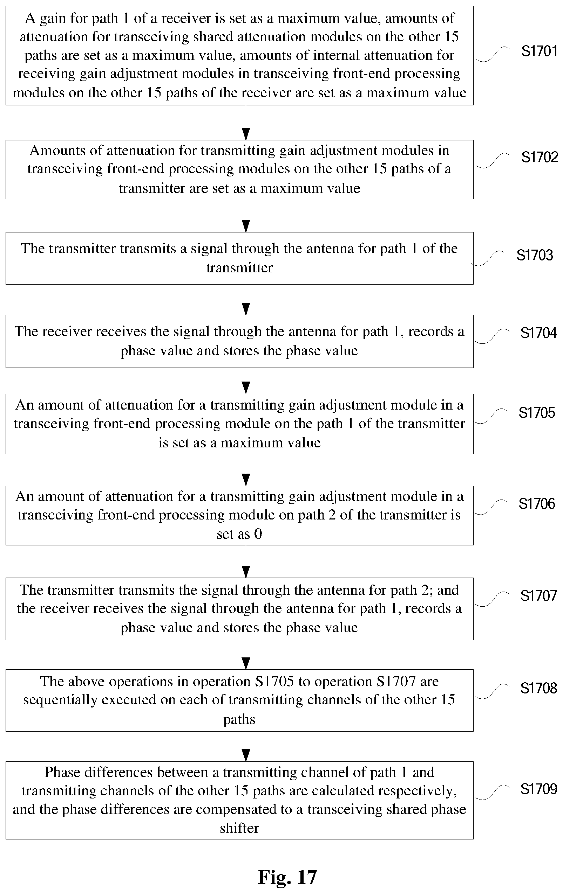

Fig. 17 is a transmitting calibration process according to an exemplary embodiment of the disclosure. The process may include the following operations.

At S1701: a gain for path 1 of a receiver is set as a maximum value, amounts of attenuation for transceiving shared attenuation modules on the other 15 paths are set as a maximum value, amounts of internal attenuation for receiving gain adjustment modules in transceiving front-end processing modules on the other 15 paths of the receiver are set as a maximum value, and then operation S1702 is executed.

At S1702: amounts of attenuation for transmitting gain adjustment modules in transceiving front-end processing modules on the other 15 paths of a transmitter are set as a maximum value, and then operation S1703 is executed.

At S1703: the transmitter transmits a signal through the antenna for path 1 of the transmitter, and then operation S1704 is executed.

At S1704: the receiver receives the signal through the antenna for path 1, records a phase value and stores the phase value, and then operation S1705 is executed.

At S1705: an amount of attenuation for a transmitting gain adjustment module in a transceiving front-end processing module on the path 1 of the transmitter is set as a maximum value, and then operation S1706 is executed.

At S 1706: an amount of attenuation for a transmitting gain adjustment module in a transceiving front-end processing module on path 2 of the transmitter is set as 0, and then operation S 1707 is executed.

At S 1707: the transmitter transmits the signal through the antenna for path 2; the receiver receives the signal through the antenna for path 1, records a phase value and stores the phase value; and then operation S 1708 is executed.

At S 1708: the above operations in operation S 1705 to operation S 1707 are sequentially executed on each of transmitting channels of the other 15 paths.

At S 1709: phase differences between a transmitting channel of path 1 and transmitting channels of the other 15 paths are calculated respectively, and the phase differences are compensated to a transceiving shared phase shifter.

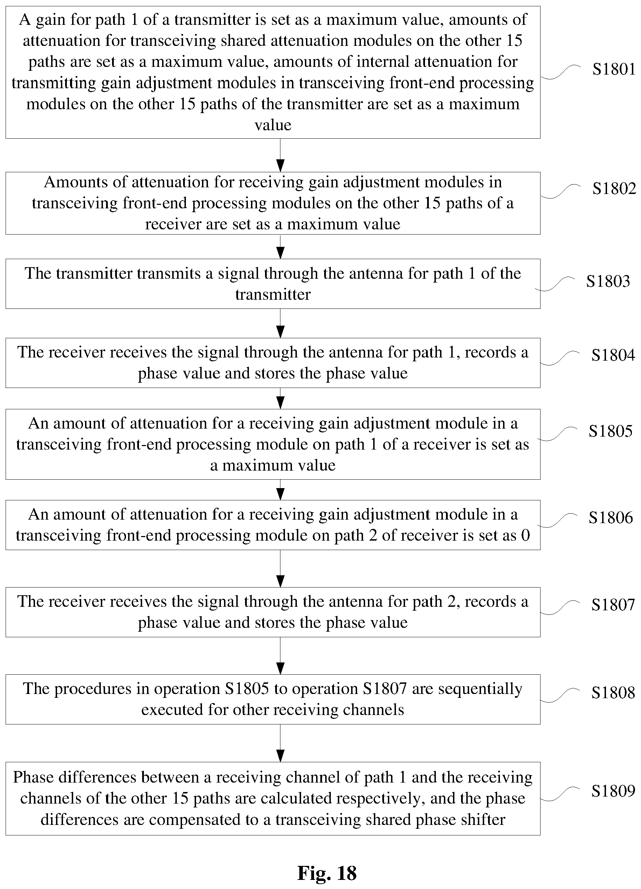

Fig. 18 is a receiving calibration process according to an exemplary embodiment of the disclosure. The process may include the following operations.

At S 1801: a gain for path 1 of a transmitter is set as a maximum value, amounts of attenuation for transceiving shared attenuation modules on the other 15 paths are set as a maximum value, amounts of internal attenuation for transmitting gain adjustment modules in transceiving front-end processing modules on the other 15 paths of the transmitter are set as a maximum value, and then operation S1802 is executed.

At S1802: amounts of attenuation for receiving gain adjustment modules in transceiving front-end processing modules on the other 15 paths of a receiver are set as a maximum value, and then operation S 1803 is executed.

At S 1803: the transmitter transmits a signal through the antenna for path 1 of the transmitter, and then operation S 1804 is executed.

At S 1804: the receiver receives the signal through the antenna for path 1, records a phase value and stores the phase value, and then operation S 1805 is executed.

At S1805: an amount of attenuation for a receiving gain adjustment module in a transceiving front-end processing module on path 1 of a receiver is set as a maximum value, and then operation S 1806 is executed.

At S1806: an amount of attenuation for a receiving gain adjustment module in a transceiving front-end processing module on path 2 of receiver is set as 0, and then operation S1807 is executed.

At S 1807: the receiver receives the signal through the antenna for path 2, records a phase value and stores the phase value, and then operation S 1808 is executed.

At S 1808: the procedures in operation S1805 to operation S1807 are sequentially executed for other receiving channels.

At S 1809: phase differences between a receiving channel of path 1 and the receiving channels of the other 15 paths are calculated respectively, and the phase differences are compensated to a transceiving shared phase shifter.

### Exemplary embodiment 2:

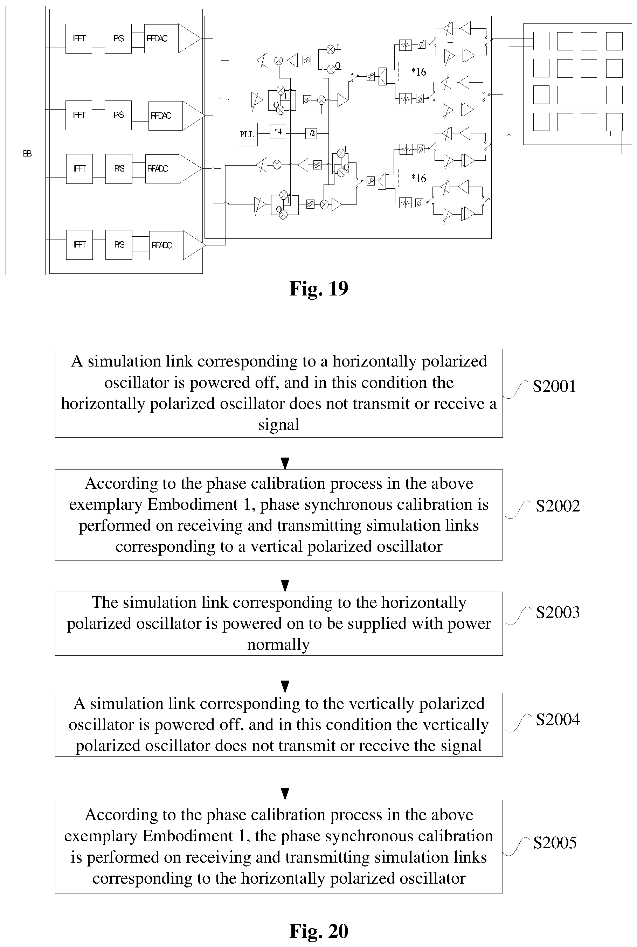

Fig. 19 is a dual-polarized implementation solution based on a 4*4 array in another exemplary application example according to an exemplary embodiment of the disclosure. The antenna is a dual-polarized antenna having two feeding ports, so the number of channels of a simulation link is doubled. Compared with the single polarized solution, the calibration process increases a part of procedures compared than Embodiment 1. Fig. 20 is a transmitting calibration process of the solution. The process may include the following operations.

At S2001: a simulation link corresponding to a horizontally polarized oscillator is powered off, and in this condition the horizontally polarized oscillator does not transmit or receive a signal.

At S2002: according to the phase calibration process in the above exemplary Embodiment 1, phase synchronous calibration is performed on receiving and transmitting simulation links corresponding to a vertical polarized oscillator.

At S2003: the simulation link corresponding to the horizontally polarized oscillator is powered on to be supplied with power normally.

At S2004: a simulation link corresponding to the vertically polarized oscillator is powered off, and in this condition the vertically polarized oscillator does not transmit or receive the signal.

At S2005: according to the phase calibration process in the above exemplary Embodiment 1, the phase synchronous calibration is performed on receiving and transmitting simulation links corresponding to the horizontally polarized oscillator.

### Exemplary embodiment 3:

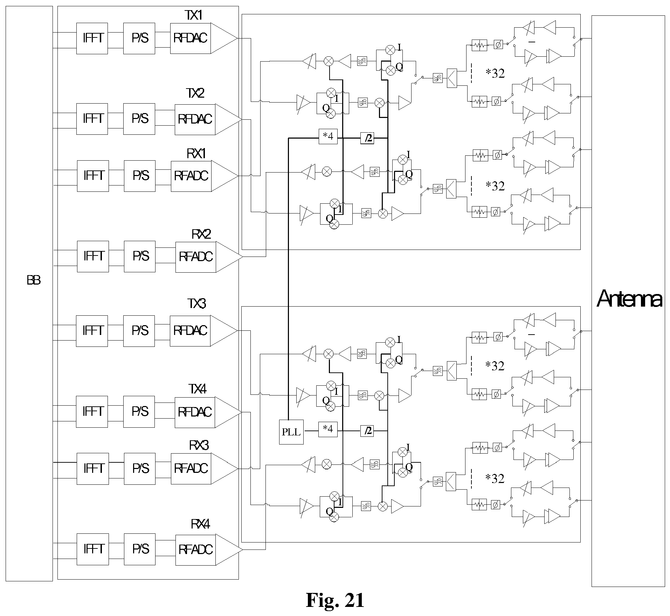

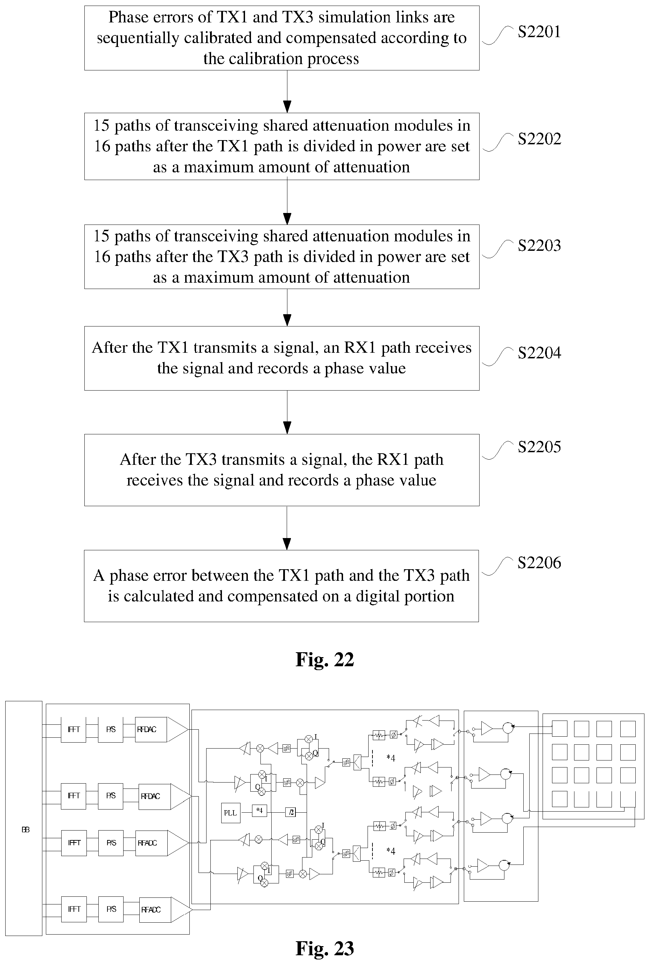

Fig. 21 is a circuit diagram of another application embodiment of dual-polarized beam forming based on a 4*8 array. The embodiment may support a single user and may also support multiple users. In the embodiment, two paths of digital transmitting channels and two paths of digital receiving channels are provided, and each path of digital transmitting and receiving channel may be formed into one beam. Two users are supported in the embodiment, and two paths of digital receiving and transmitting channels may perform joint forming to form one beam. The single user is supported in the embodiment. Joint forming is performed on TX1 and TX3 paths to form one polarized directional beam, and joint forming is performed on TX2 and TX4 to form another polarized directional beam. When the single user is supported, in addition to the calibration process provided in the disclosure, a part of procedures are further additionally increased in the calibration process. The increased calibration procedures are used to implement phase calibration between the TX1 path and the TX3 path, as well as phase calibration between the TX2 path and the TX4 path. Herein, the calibration process between the TX1 path and the TX3 path is as illustrated in Fig. 22, and may include the following operations.

At S2201: phase errors of the TX1 and TX3 simulation links are sequentially calibrated and compensated according to the calibration process.

At S2202: 15 paths of transceiving shared attenuation modules in 16 paths after the TX1 path is divided in power are set as a maximum amount of attenuation.

At S2203: 15 paths of transceiving shared attenuation modules in 16 paths after the TX3 path is divided in power are set as a maximum amount of attenuation.

At S2204: after the TX1 transmits a signal, an RX1 path receives the signal and records a phase value.

At S2205: after the TX3 transmits a signal, the RX1 path receives the signal and records a phase value.

At S2206: a phase error between the TX1 path and the TX3 path is calculated and compensated on a digital portion.

### Exemplary embodiment 4:

Fig. 23 is a dual-polarized high-power output embodiment based on a 4*4 array. The mmW transceiver provided in the disclosure may further support high-power output. According to current process capability of the mmW, the output of high power requires the PA to be implemented by a gallium nitride process. Unlike the front-end phase shifter and the low-noise amplification process, to output the high power, a switch, a PA and a circulator may be cascaded at an mmW input/output port of the transceiver.

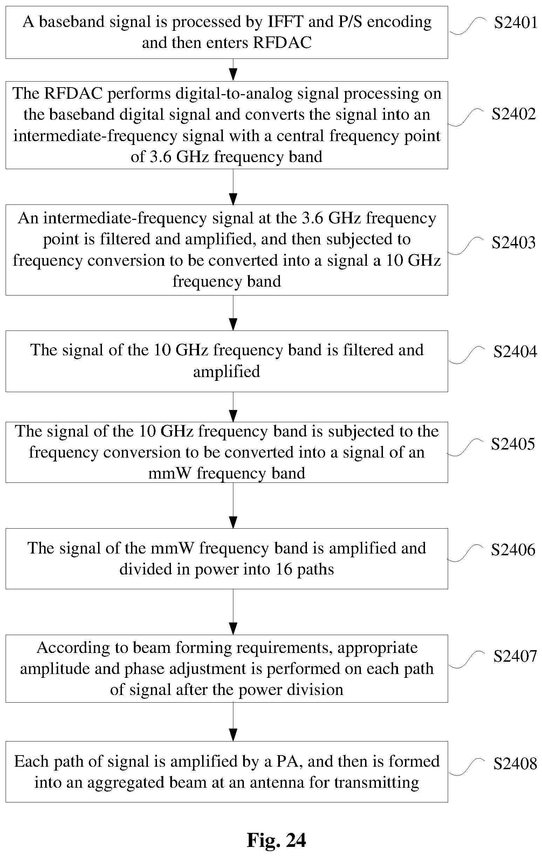

Compared with Embodiment 1, the process for transmitting the signal changes partially. The process for transmitting the signal is as illustrated in Fig. 24. In this case, all switches are in a transmitting state and the detailed descriptions are as follows:
At S2401: a baseband signal is processed by IFFT and P/S encoding and then enters RFDAC.
At S2402: the RFDAC performs digital-to-analog signal processing on the baseband digital signal and converts the signal into an intermediate-frequency signal with a central frequency point of 3.6 GHz frequency band.
At S2403: an intermediate-frequency signal at the 3.6 GHz frequency point is filtered and amplified, and then subjected to frequency conversion to be converted into a signal a 10 GHz frequency band.
At S2404: the signal of the 10 GHz frequency band is filtered and amplified.
At S2405: the signal of the 10 GHz frequency band is subjected to the frequency conversion to be converted into a signal of an mmW frequency band.
At S2406: the signal of the mmW frequency band is amplified and divided in power into 16 paths.
At S2407: according to beam forming requirements, appropriate amplitude and phase adjustment is performed on each path of signal after the power division.
At S2408: each path of signal is amplified by a PA, and then is formed into an aggregated beam at an antenna for transmitting.

### Embodiment 5

An embodiment further provides an apparatus for calibrating a receiving channel and an apparatus for calibrating a transmitting channel for implementing the above-mentioned embodiments and preferred implementation manners. A content that has been described will no longer be repeated. As used below, the term "module" may implement a combination of software and/or hardware having a predetermined function. Although the apparatus described in the following embodiments is implemented by software preferably, the implementation of hardware or a combination of the software and the hardware may also be conceivable.

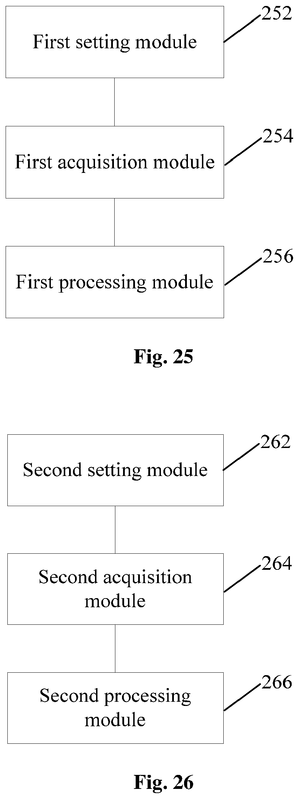

Fig. 25 is a structural block diagram of an apparatus for calibrating a receiving channel according to an embodiment of the disclosure. The apparatus may be applied to the transceiver in the above any embodiment. As shown in Fig. 25, the apparatus may include: a first setting module 252, a first acquisition module 254, and a first processing module 256.

The first setting module 252 is configured to set an amount of attenuation for a signal transmitting device in one path of signal transceiving device as 0, and set amounts of attenuation for signal transmitting devices in other paths of signal transceiving devices as a supported maximum value; the first acquisition module 254 is connected to the above first setting module 252, and is configured to acquire a phase value of a signal received by a signal receiving device in each path of signal transceiving device by controlling the signal transmitting device in the one path of signal transceiving device to transmit a signal and respectively controlling the signal receiving device in each path of signal transceiving device to receive the signal; and the first processing module 256 is connected to the above first acquisition module 254, and is configured to respectively determine a phase difference between the phase value of the signal received by each signal receiving device and a phase value of a signal received by each of other signal receiving devices, and respectively compensate the phase difference compensated to the transceiving shared phase shift module corresponding to each path of signal transceiving device.

In an exemplary embodiment, the first acquisition module 254 is specifically configured to: control the signal transmitting device in the one path of signal transceiving device to transmit the signal; and repeatedly execute the following operations till phase values of signals received by signal receiving devices in all paths of signal transceiving devices are acquired: an amount of attenuation for the front-end processing module of the signal receiving device in the one path of signal transceiving device is set as 0 to receive a signal, and the phase value of the received signal is recorded; and the amount of attenuation for the front-end processing module of the signal receiving device in the one path of signal transceiving device is set as a supported maximum value, an amount of attenuation for a front-end processing module of a signal receiving device in another path of signal transceiving device except for the one path of signal transceiving device is set as 0 to receive a signal, and the phase value of the received signal is recorded.

Fig. 26 is a structural block diagram of an apparatus for calibrating a transmitting channel according to an embodiment of the disclosure. The apparatus may be applied to the transceiver in the above any embodiment. As shown in Fig. 26, the apparatus may include: a second setting module 262, a second acquisition module 264 and a second processing module 266.

The second setting module 262 is configured to set an amount of attenuation for a signal receiving device in one path of signal transceiving device as 0, and set amounts of attenuation for signal receiving devices in other paths of signal transceiving devices as a supported maximum value; the second acquisition module 264 is connected to the above second setting module 262, and is configured to acquire phase values of signals respectively received by the signal receiving device in the one path of signal transceiving device by respectively controlling a signal transmitting device in each path of signal transceiving device to transmit a signal and controlling the signal receiving device in the one path of signal transceiving device to receive the signal; and the second processing module 266 is connected to the above second acquisition module 264, and is configured to respectively determine a phase difference between the phase value of the signal received in one instance by the signal receiving device in the one path of signal transceiving device and the phase value of each of signals received in other instances by the signal receiving device in the one path of signal transceiving device, and correspondingly compensate the determined phase difference to the transceiving shared phase shift module corresponding to each path of signal transceiving device.

In an exemplary embodiment, the second acquisition module 264 is specifically configured to: set an amount of attenuation for a front-end processing module of the signal transmitting device in the one path of signal transceiving device as 0 to transmit a signal; and repeatedly execute the following operations till phase values of all signals respectively received by the signal receiving devices in the one path of signal transceiving device are acquired: the signal receiving device in the one path of signal transceiving device is controlled to receive a signal and the phase value of the received signal is recorded; and the amount of attenuation for the front-end processing module of the signal transmitting device in the one path of signal transceiving device is set as a supported maximum value, an amount of attenuation for a front-end processing module of a signal transmitting device in another path of signal transceiving device except for the one path of signal transceiving device is set as 0 to transmit a signal, the signal receiving device in the one path of signal transceiving device is controlled to receive a signal and the phase value of the received signal is recorded.

It is to be noted that each module may be implemented by software or hardware. The latter may be implemented via the following manner but is not limited thereto: the above modules are located in the same processor; or the above modules are respectively located in different processors in any combined form.

### Embodiment 6

In the embodiment of the disclosure, a signal transceiving system is further provided, which may include the above antenna, and one or more transceivers in the above any embodiment; and the one or more transceivers are connected to the antenna.

In an exemplary embodiment, the signal transceiving system may further include a baseband processing module. The baseband processing module is connected to the one or more transceivers.

### Embodiment 7

In the embodiment of the disclosure, a storage medium is further provided; the storage medium includes a stored program; and the program, when being executed, performs the method in the above any embodiment.

Optionally, in this embodiment, the storage medium may include but not limited to: various media capable of storing a program code such as a U disk, an ROM, an RAM, a mobile hard disk, a magnetic disk or an optical disc.

### Embodiment 8

In the embodiment of the disclosure, an electronic apparatus is further provided, which may include a memory, a processor and a computer program stored on the memory and capable of being executed on the processor; and the processor performs the method in the above any embodiment through executing the computer program.

By means of the above embodiments, the following beneficial effects may be achieved.

The embodiments of the disclosure are mainly applied to a 5G high-frequency base station system. The solution of the embodiments simplifies the link solution of the base station, reduces the size of the base station, and implements the large-scale antenna array. In the embodiments of the disclosure, a method for calibrating the 5G high-frequency base station system is further proposed. The calibration solution is implemented in cooperation with a hardware link, such that a feedback calibration hardware channel is not additionally increased.

The mmW transceiver proposed in the embodiment of the disclosure further relates to a phase synchronous calibration method. No hardware channel needs to be additionally increased. This phase synchronous calibration method, in cooperation with the transceiving shared attenuation module proposed in the embodiments of the disclosure, can achieve the phase calibration of the system between multiple paths, such that the hardware complexity for the phase calibration between the multiple paths may be reduced, and the area of the PCB is saved. In contrast, the traditional calibration method further needs to increase a hardware coupling feedback channel at the antenna port for calibration.

The hardware link of the mmW transceiver proposed in the embodiments of the disclosure uses a secondary frequency conversion solution. Compared with the traditional primary frequency conversion solution, the suppression pressure of the filter for the image may be reduced. The secondary frequency conversion solution is implemented by one intermediate-frequency filter and one mmW filter, and there is no need to cascade multi-order filters, so that the performance of the system EVM is improved.

Each path on the hardware link of the mmW transceiver proposed in the embodiments of the disclosure uses the transceiving shared phase shifter, and the phase shifter uses a passive reciprocal structure. Compared with the transceiving separated phase shifter of the related art, the transceiving shared phase shifter may reduce the change of calibration parameter due to amplitude and phase errors between the phase shifters, i.e., the parameter for the error calibration between the transceiving phase shifters in the disclosure may be shared. In addition, the number of phase shifters is reduced, and thus the area of the PCB is saved.

It is apparent that those skilled in the art should understand that the modules or operations of the disclosure may be implemented by a general-purpose computing device and centralized in a single computing device or distributed over a network consisting of a plurality of computing devices. Optionally, they may be implemented by a program code executable by a computing device, so that they may be stored in a storage device and executed by the computing device. Moreover, they may be different from the operations illustrated or described herein in some cases, or implemented by respectively fabricating them into respective integrated circuit modules or by fabricating a plurality of modules or operations of them into a single integrated circuit module. By doing so, the disclosure is not limited to any specific combination of hardware and software.

## Claims

1. A transceiver, comprising a power division module and at least two paths of signal transceiving and processing devices, each path of signal transceiving and processing device comprising a transceiving shared attenuation module, a transceiving shared phase shift module and a transceiving front-end processing module, wherein
the transceiving shared attenuation module is connected to the power division module, and is configured to attenuate a received or to-be-transmitted signal;
the transceiving shared phase shift module is connected to the transceiving shared attenuation module, and is configured to adjust a phase of the received or to-be-transmitted signal; and
one end of the transceiving front-end processing module is connected to the transceiving shared phase shift module, and the other end of the transceiving front-end processing module is configured to be connected to an antenna for receiving or transmitting a signal;
wherein the transceiver further comprises an apparatus for calibrating a receiving channel, and the apparatus comprises:
a first setting module (252), configured to set an amount of attenuation for a signal transmitting device in one path of signal transceiving device as 0, and set amounts of attenuation for signal transmitting devices in other paths of signal transceiving devices as a supported maximum value;
a first acquisition module (254), configured to acquire a phase value of a signal received by a signal receiving device in each path of signal transceiving device by controlling the signal transmitting device in the one path of signal transceiving device to transmit a signal and respectively controlling the signal receiving device in each path of signal transceiving device to receive the signal; and
a first processing module (256), configured to respectively determine a phase difference between the phase value of the signal received by each signal receiving device and a phase value of a signal received by each of other signal receiving devices, and respectively compensate the phase difference to the transceiving shared phase shift module corresponding to each path of signal transceiving device.

2. The transceiver as claimed in claim 1, further comprising a receiving intermediate-frequency processing, filtration and frequency-conversion module, a transmitting intermediate-frequency processing, filtration and frequency-conversion module, a local oscillation module, a transceiving shift switch, and a transceiving shared filtration module, wherein
the receiving intermediate-frequency processing, filtration and frequency-conversion module is configured to be connected to a baseband processing module;
the transmitting intermediate-frequency processing, filtration and frequency-conversion module is configured to be connected to the baseband processing module;
the local oscillation module is connected to the receiving intermediate-frequency processing, filtration and frequency-conversion module and the transmitting intermediate-frequency processing, filtration and frequency-conversion module;
the transceiving shift switch is connected to the receiving intermediate-frequency processing, filtration and frequency-conversion module and the transmitting intermediate-frequency processing, filtration and frequency-conversion module; and
one end of the transceiving shared filtration module is connected to the transceiving shift switch, and the other end of the transceiving shared filtration module is connected to the power division module.

3. The transceiver as claimed in claim 2, wherein the receiving intermediate-frequency processing, filtration and frequency-conversion module comprises a receiving intermediate-frequency gain adjustment module, a receiving down converter, a receiving filter module and a receiving demodulator;
the receiving intermediate-frequency gain adjustment module is configured to be connected to the baseband processing module;
the receiving down converter is connected to the receiving intermediate-frequency gain adjustment module, and is configured to perform frequency conversion on the received signal from a High Intermediate Frequency (HIF) to a Low Intermediate Frequency (LIF);
the receiving filter module is connected to the receiving down converter; and
the receiving demodulator is connected to the receiving filter module.

4. The transceiver as claimed in claim 2, wherein the transmitting intermediate-frequency processing, filtration and frequency-conversion module comprises a transmitting intermediate-frequency gain adjustment module, a transmitting demodulator module, a transmitting filter module and a transmitting upconverter;
the transmitting intermediate-frequency gain adjustment module is configured to be connected to the baseband processing module;
the transmitting demodulator module is connected to the transmitting intermediate-frequency gain adjustment module, and is configured to perform frequency conversion from a Low Intermediate Frequency, LIF, to a High Intermediate Frequency, HIF, on the to-be-transmitted signal;
the transmitting filter module is connected to the transmitting demodulator module; and
the transmitting upconverter is connected to the transmitting filter module.

5. The transceiver as claimed in any one of claims 1 to 4, wherein the transceiving shared phase shift module adopts a passive structure.

6. A method for calibrating a receiving channel, applied to the transceiver as claimed in any one of claims 1 to 5, and comprising:
setting an amount of attenuation for a signal transmitting device in one path of signal transceiving device as 0, and setting amounts of attenuation for signal transmitting devices in other paths of signal transceiving devices as a supported maximum value (S702);
acquiring a phase value of a signal received by a signal receiving device in each path of signal transceiving device by controlling the signal transmitting device in the one path of signal transceiving device to transmit a signal and respectively controlling the signal receiving device in each path of signal transceiving device to receive the signal (S704); and
respectively determining a phase difference between the phase value of the signal received by each signal receiving device and a phase value of a signal received by each of other signal receiving devices, and respectively compensating the phase difference to the transceiving shared phase shift module corresponding to each path of signal transceiving device (S706).

7. The method for calibrating the receiving channel as claimed in claim 6, wherein acquiring the phase value of the signal received by the signal receiving device in each path of signal transceiving device by controlling the signal transmitting device in the one path of signal transceiving device to transmit the signal and respectively controlling the signal receiving device in each path of signal transceiving device to receive the signal (S704) comprises:
controlling the signal transmitting device in the one path of signal transceiving device to transmit the signal; and
repeatedly executing the following operations till phase values of signals received by signal receiving devices in all paths of signal transceiving devices are acquired:
setting an amount of attenuation for a front-end processing module of the signal receiving device in the one path of signal transceiving device as 0 to receive a signal, and recording the phase value of the received signal; and
setting the amount of attenuation for the front-end processing module of the signal receiving device in the one path of signal transceiving device as a supported maximum value, setting an amount of attenuation for a front-end processing module of a signal receiving device in another path of signal transceiving device except for the one path of signal transceiving device as 0 to receive a signal, and recording the phase value of the received signal.

8. A method for calibrating a transmitting channel, applied to the transceiver as claimed in any one of claims 1 to 5, and comprising:
setting an amount of attenuation for a signal receiving device in one path of signal transceiving device as 0, and setting amounts of attenuation for signal receiving devices in other paths of signal transceiving devices as a supported maximum value (S 1002);
acquiring phase values of signals respectively received by the signal receiving device in the one path of signal transceiving device by respectively controlling a signal transmitting device in each path of signal transceiving device to transmit a signal and controlling the signal receiving device in the one path of signal transceiving device to receive the signal (S 1004); and
respectively determining a phase difference between the phase value of the signal received in one instance by the signal receiving device in the one path of signal transceiving device and the phase value of each of signals received in other instances by the signal receiving device in the one path of signal transceiving device, and correspondingly compensating the determined phase difference to the transceiving shared phase shift module corresponding to each path of signal transceiving device (S 1006).

9. The method for calibrating the transmitting channel as claimed in claim 8, wherein acquiring the phase values of the signals respectively received by the signal receiving device in the one path of signal transceiving device by respectively controlling the signal transmitting device in each path of signal transceiving device to transmit the signal and controlling the signal receiving device in the one path of signal transceiving device to receive the signal (S 1004) comprises:
setting an amount of attenuation for a front-end processing module of the signal transmitting device in the one path of signal transceiving device as 0 to transmit the signal; and
repeatedly executing the following operations till phase values of all signals respectively received by the signal receiving device in the one path of signal transceiving device are acquired:
controlling the signal receiving device in the one path of signal transceiving device to receive a signal and recording the phase value of the received signal; and
setting the amount of attenuation for the front-end processing module of the signal transmitting device in the one path of signal transceiving device as a supported maximum value, setting an amount of attenuation for a front-end processing module of a signal transmitting device in another path of signal transceiving device except for the one path of signal transceiving device as 0 to transmit a signal, controlling the signal receiving device in the one path of signal transceiving device to receive the signal and recording the phase value of the received signal.

10. An apparatus for calibrating a receiving channel, applied to the transceiver as claimed in any one of claims 1 to 5, and comprising:
a first setting module (252), configured to set an amount of attenuation for a signal transmitting device in one path of signal transceiving device as 0, and set amounts of attenuation for signal transmitting devices in other paths of signal transceiving devices as a supported maximum value;
a first acquisition module (254), configured to acquire a phase value of a signal received by a signal receiving device in each path of signal transceiving device by controlling the signal transmitting device in the one path of signal transceiving device to transmit a signal and respectively controlling the signal receiving device in each path of signal transceiving device to receive the signal; and
a first processing module (256), configured to respectively determine a phase difference between the phase value of the signal received by each signal receiving device and a phase value of a signal received by each of other signal receiving devices, and respectively compensate the phase difference to the transceiving shared phase shift module corresponding to each path of signal transceiving device.

11. An apparatus for calibrating a transmitting channel, applied to the transceiver as claimed in any one of claims 1 to 5, and comprising:
a second setting module (262), configured to set an amount of attenuation for a signal receiving device in one path of signal transceiving device as 0, and set amounts of attenuation for signal receiving devices in other paths of signal transceiving devices as a supported maximum value;
a second acquisition module (264), configured to acquire phase values of signals respectively received by the signal receiving device in the one path of signal transceiving device by respectively controlling a signal transmitting device in each path of signal transceiving device to transmit a signal and controlling the signal receiving device in the one path of signal transceiving device to receive the signal; and
a second processing module (266), configured to respectively determine a phase difference between the phase value of the signal received in one instance by the signal receiving device in the one path of signal transceiving device and the phase value of each of signals received in other instances by the signal receiving device in the one path of signal transceiving device, and correspondingly compensate the determined phase difference to the transceiving shared phase shift module corresponding to each path of signal transceiving device.

12. A signal transceiving system, comprising an antenna, and one or more transceivers as claimed in any one of claims 1 to 5, wherein
the one or more transceivers are connected to the antenna.

13. The signal transceiving system as claimed in claim 12, further comprising a baseband processing module, wherein
the baseband processing module is connected to the one or more transceivers.

14. A storage medium, comprising a stored program, wherein the program, when being executed by a computer, cause the computer to carry out the steps of the method as claimed in any one of claims 6 to 9.

15. An electronic apparatus, comprising a memory, a processor and a computer program stored on the memory and capable of being executed on the processor, wherein the processor performs the method as claimed in any one of claims 6 to 9 through executing the computer program.

## Patentansprüche

1. Sendeempfänger, umfassend ein Leistungsteilungsmodul und mindestens zwei Pfade von Signal-Sendeempfangs- und -Verarbeitungsvorrichtungen, wobei jeder Pfad von Signal-Sendeempfangs- und -Verarbeitungsvorrichtungen ein gemeinsam genutztes Sendeempfangs-Dämpfungsmodul, ein gemeinsam genutztes Sendeempfangsphasenverschiebungsmodul und ein Sendeempfangs-Front-End-Verarbeitungsmodul umfasst, wobei
das gemeinsam genutzte Sendeempfangs-Dämpfungsmodul mit dem Leistungsteilungsmodul verbunden ist und so konfiguriert ist, dass es ein empfangenes oder zu sendendes Signal dämpft;
das gemeinsam genutzte Sendeempfangs-Dämpfungsmodul mit dem gemeinsam genutzten Sendeempfangsphasenverschiebungsmodul verbunden ist und so konfiguriert ist, dass es eine Phase des empfangenen oder zu sendenden Signals anpasst; und
ein Ende des Sendeempfangs-Front-End-Verarbeitungsmoduls mit dem gemeinsam genutzten Sendeempfangsphasenverschiebungsmodul verbunden ist und das andere Ende des Sendeempfangs-Front-End-Verarbeitungsmoduls konfiguriert ist, mit einer Antenne zum Empfangen oder Senden eines Signals verbunden zu werden;
wobei der Sendeempfänger ferner eine Vorrichtung zum Kalibrieren eines Empfangskanals umfasst und die Vorrichtung umfasst:
ein erstes Einstellmodul (252), das so konfiguriert ist, dass es einen Dämpfungsbetrag für eine Signalsendevorrichtung in einem Pfad einer Signalsendeempfangsvorrichtung als 0 einstellt und Dämpfungsbeträge für Signalsendevorrichtungen in anderen Pfaden von Signalsendeempfangsvorrichtungen als einen unterstützten Maximalwert einstellt;
ein erstes Erfassungsmodul (254), das so konfiguriert ist, dass es einen Phasenwert eines Signals erfasst, das durch eine Signalempfangsvorrichtung in jedem Pfad einer Signalsendeempfangsvorrichtung empfangen wird, indem es die Signalsendevorrichtung in dem einen Pfad der Signalsendeempfangsvorrichtung so steuert, dass sie ein Signal sendet, und jeweils die Signalempfangsvorrichtung in jedem Pfad der Signalsendeempfangsvorrichtung so steuert, dass sie das Signal empfängt; und
ein erstes Verarbeitungsmodul (256), das so konfiguriert ist, dass es jeweils eine Phasendifferenz zwischen dem Phasenwert des durch jede Signalempfangsvorrichtung empfangenen Signals und einem Phasenwert eines durch jede der anderen Signalempfangsvorrichtungen empfangenen Signals bestimmt und jeweils die Phasendifferenz zu dem gemeinsam genutzten Sendeempfangsphasenverschiebungsmodul entsprechend jedem Pfad der Signalsendeempfangsvorrichtung kompensiert.

2. Sendeempfänger nach Anspruch 1, ferner umfassend ein Empfangs-Zwischenfrequenzverarbeitungs-, -Filterungs- und -Frequenzumwandlungsmodul, ein Sende-Zwischenfrequenzverarbeitungs-, -Filterungs- und -Frequenzumwandlungsmodul, ein lokales Oszillationsmodul, einen Sendeempfangsverschiebungsschalter und ein gemeinsam genutztes Sendeempfangsfilterungsmodul, wobei
das Empfangs-Zwischenfrequenzverarbeitungs-, -Filterungs- und - Frequenzumwandlungsmodul konfiguriert ist, um mit einem Basisbandverarbeitungsmodul verbunden zu werden;
das Sende-Zwischenfrequenzverarbeitungs-, -Filterungs- und -Frequenzumwandlungsmodul konfiguriert ist, um mit dem Basisbandverarbeitungsmodul verbunden zu werden;
das lokale Oszillationsmodul mit dem Empfangs-Zwischenfrequenzverarbeitungs-, - Filterungs- und -Frequenzumwandlungsmodul und dem Sende-Zwischenfrequenzverarbeitungs-, -Filterungs- und -Frequenzumwandlungsmodul verbunden ist;
der Sendeempfangsverschiebungsschalter mit dem Empfangs-Zwischenfrequenzverarbeitungs-, -Filterungs- und -Frequenzumwandlungsmodul und dem Sende-Zwischenfrequenzverarbeitungs-, -Filterungs- und -Frequenzumwandlungsmodul verbunden ist; und
ein Ende des gemeinsam genutzten Sendeempfangsfilterungsmoduls mit dem Sendeempfangsverschiebungsschalter verbunden ist und das andere Ende des gemeinsam genutzten Sendeempfangsfilterungsmoduls mit dem Leistungsteilungsmodul verbunden ist.

3. Sendeempfänger nach Anspruch 2, wobei das Empfangs-Zwischenfrequenzverarbeitungs-, -Filterungs- und -Frequenzumwandlungsmodul ein Empfangs-Zwischenfrequenzverstärkungsanpassungsmodul, einen Empfangsabwärtswandler, ein Empfangsfiltermodul und einen Empfangs-demodulator umfasst;
das Empfangs-Zwischenfrequenzverstärkungsanpassungsmodul konfiguriert ist, um mit dem Basisbandverarbeitungsmodul verbunden zu werden;
der Empfangsabwärtswandler mit dem Empfangs-Zwischenfrequenzverstärkungsanpassungsmodul verbunden ist und so konfiguriert ist, dass er eine Frequenzumwandlung an dem empfangenen Signal von einer hohen Zwischenfrequenz (High Intermediate Frequency, HIF) zu einer niedrigen Zwischenfrequenz (Low Intermediate Frequency, LIF) durchführt;
das Empfangsfiltermodul mit dem Empfangsabwärtswandler verbunden ist; und
der Empfangsdemodulator mit dem Empfangsfiltermodul verbunden ist.

4. Sendeempfänger nach Anspruch 2, wobei das Sende-Zwischenfrequenzverarbeitungs-, -Filterungs- und -Frequenzumwandlungsmodul ein Sende-Zwischenfrequenzverstärkungsanpassungsmodul, ein Sendedemodulatormodul, ein Sendefiltermodul und einen Sendeaufwärtswandler umfasst;
das Sende-Zwischenfrequenzverstärkungsanpassungsmodul konfiguriert ist, um mit dem Basisbandverarbeitungsmodul verbunden zu werden;
das Sendedemodulatormodul mit dem Sende-Zwischenfrequenzverstärkungsanpassungsmodul verbunden ist und so konfiguriert ist, dass es eine Frequenzumwandlung von einer niedrigen Zwischenfrequenz, LIF, zu einer hohen Zwischenfrequenz, HIF, an dem zu sendenden Signal durchführt;
das Sendefiltermodul mit dem Sendedemodulatormodul verbunden ist; und
der Sendeaufwärtswandler mit dem Sendefiltermodul verbunden ist.

5. Sendeempfänger nach einem der Ansprüche 1 bis 4, wobei das gemeinsam genutzte Sendeempfangsphasenverschiebungsmodul eine passive Struktur annimmt.

6. Verfahren zum Kalibrieren eines Empfangskanals, das auf den Sendeempfänger nach einem der Ansprüche 1 bis 5 angewendet wird und umfasst:
Einstellen eines Dämpfungsbetrags für eine Signalsendevorrichtung in einem Pfad einer Signalsendeempfangsvorrichtung als 0 und Einstellen von Dämpfungsbeträgen für Signalsendevorrichtungen in anderen Pfaden von Signalsendeempfangsvorrichtungen als einen unterstützten Maximalwert (S702);
Erfassen eines Phasenwerts eines Signals, das durch eine Signalempfangsvorrichtung in jedem Pfad einer Signalsendeempfangsvorrichtung empfangen wird, indem es die Signalsendevorrichtung in dem einen Pfad der Signalsendeempfangsvorrichtung so steuert, dass sie ein Signal sendet, und jeweils die Signalempfangsvorrichtung in jedem Pfad der Signalsendeempfangsvorrichtung so steuert, dass sie das Signal empfängt (S704); und
jeweiliges Bestimmen einer Phasendifferenz zwischen dem Phasenwert des durch jede Signalempfangsvorrichtung empfangenen Signals und eines Phasenwerts eines durch jede der anderen Signalempfangsvorrichtungen empfangenen Signals und jeweiliges Kompensieren der Phasendifferenz zu dem gemeinsam genutzten Sendeempfangsphasenverschiebungsmodul entsprechend jedem Pfad der Signalsendeempfangsvorrichtung (S706).

7. Verfahren zum Kalibrieren des Empfangskanals nach Anspruch 6, wobei das Erfassen des Phasenwerts des Signals, das durch die Signalempfangsvorrichtung in jedem Pfad einer Signalsendeempfangsvorrichtung empfangen wird, indem die Signalsendevorrichtung in dem einen Pfad der Signalsendeempfangsvorrichtung so gesteuert wird, dass sie das Signal sendet, und jeweils die Signalempfangsvorrichtung in jedem Pfad der Signalsendeempfangsvorrichtung so gesteuert wird, dass sie das Signal empfängt (S704), umfasst:
Steuern der Signalsendeempfangsvorrichtung in dem einen Pfad der Signalsendeempfangsvorrichtung, um das Signal zu senden; und
wiederholtes Ausführen der folgenden Operationen, bis Phasenwerte von Signalen, die durch Signalempfangsvorrichtungen in allen Pfaden von Signalsendeempfangsvorrichtungen empfangen werden, erfasst sind:
Einstellen eines Dämpfungsbetrags für ein Front-End-Verarbeitungsmodul der Signalempfangsvorrichtung in dem einen Pfad der Signalsendeempfangsvorrichtung auf 0, um ein Signal zu empfangen, und Aufzeichnen des Phasenwerts des empfangenen Signals; und
Einstellen des Dämpfungsbetrags für das Front-End-Verarbeitungsmodul der Signalempfangsvorrichtung in dem einen Pfad der Signalsendeempfangsvorrichtung als einen unterstützten Maximalwert, Einstellen eines Dämpfungsbetrags für ein Front-End-Verarbeitungsmodul einer Signalempfangsvorrichtung in einem weiteren Pfad der Signalsendeempfangsvorrichtung außer dem einen Pfad der Signalsendeempfangsvorrichtung als 0, um ein Signal zu empfangen, und Aufzeichnen des Phasenwerts des empfangenen Signals.

8. Verfahren zum Kalibrieren eines Sendekanals, das auf den Sendeempfänger nach einem der Ansprüche 1 bis 5 angewendet wird und umfasst:
Einstellen eines Dämpfungsbetrags für eine Signalempfangsvorrichtung in einem Pfad einer Signalsendeempfangsvorrichtung als 0 und Einstellen von Dämpfungsbeträgen für Signalempfangsvorrichtungen in anderen Pfaden von Signalsendeempfangsvorrichtungen als einen unterstützten Maximalwert (S 1002);
Erfassen von Phasenwerten von Signalen, die jeweils durch die Signalempfangsvorrichtung in dem einen Pfad der Signalsendeempfangsvorrichtung empfangen werden, durch jeweiliges Steuern einer Signalsendevorrichtung in jedem Pfad der Signalsendeempfangsvorrichtung, um ein Signal zu senden, und Steuern der Signalempfangsvorrichtung in dem einen Pfad der Signalsendeempfangsvorrichtung, um das Signal zu empfangen (S 1004); und
jeweiliges Bestimmen einer Phasendifferenz zwischen dem Phasenwert des Signals, das in einem Fall durch die Signalempfangsvorrichtung in dem einen Pfad der Signalsendeempfangsvorrichtung empfangen wird, und dem Phasenwert jedes der Signale, die in anderen Fällen durch die Signalempfangsvorrichtung in dem einen Pfad der Signalsendeempfangsvorrichtung empfangen werden, und entsprechendes Kompensieren der bestimmten Phasendifferenz zu dem gemeinsam genutzten Sendeempfangsphasenverschiebungsmodul, das jedem Pfad der Signalsendeempfangsvorrichtung entspricht (S 1006).

9. Verfahren zum Kalibrieren des Sendekanals nach Anspruch 8, wobei das Erfassen der Phasenwerte der Signale, die jeweils durch die Signalempfangsvorrichtung in dem einen Pfad der Signalsendeempfangsvorrichtung empfangen werden, durch jeweiliges Steuern der Signalsendevorrichtung in jedem Pfad der Signalsendeempfangsvorrichtung, um das Signal zu senden, und Steuern der Signalempfangsvorrichtung in dem einen Pfad der Signalsendeempfangsvorrichtung, um das Signal zu empfangen (S 1004), umfasst:
Einstellen eines Dämpfungsbetrags für ein Front-End-Verarbeitungsmodul der Signalsendeempfangsvorrichtung in dem einen Pfad der Signalsendeempfangsvorrichtung auf 0, um das Signal zu senden; und
wiederholtes Ausführen der folgenden Operationen, bis die Phasenwerte aller Signale, die jeweils durch die Signalempfangsvorrichtung in dem einen Pfad der Signalsendeempfangsvorrichtung empfangen werden, erfasst sind:
Steuern der Signalempfangsvorrichtung in dem einen Pfad der Signalsendeempfangsvorrichtung, um ein Signal zu empfangen, und Aufzeichnen des Phasenwerts des empfangenen Signals; und
Einstellen des Dämpfungsbetrags für das Front-End-Verarbeitungsmodul der Signalsendevorrichtung in dem einen Pfad der Signalsendeempfangsvorrichtung als einen unterstützten Maximalwert, Einstellen eines Dämpfungsbetrags für ein Front-End-Verarbeitungsmodul einer Signalsendevorrichtung in einem weiteren Pfad der Signalsendeempfangsvorrichtung außer dem einen Pfad der Signalsendeempfangsvorrichtung als 0, um ein Signal zu senden, Steuern der Signalempfangsvorrichtung in dem einen Pfad der Signalsendeempfangsvorrichtung, um das Signal zu empfangen, und Aufzeichnen des Phasenwerts des empfangenen Signals.

10. Vorrichtung zum Kalibrieren eines Empfangskanals, das auf den Sendeempfänger nach einem der Ansprüche 1 bis 5 angewendet wird und umfasst:
ein erstes Einstellmodul (252), das so konfiguriert ist, dass es einen Dämpfungsbetrag für eine Signalsendevorrichtung in einem Pfad einer Signalsendeempfangsvorrichtung als 0 einstellt und Dämpfungsbeträge für Signalsendevorrichtungen in anderen Pfaden von Signalsendeempfangsvorrichtungen als einen unterstützten Maximalwert einstellt;
ein erstes Erfassungsmodul (254), das so konfiguriert ist, dass es einen Phasenwert eines Signals erfasst, das durch eine Signalempfangsvorrichtung in jedem Pfad einer Signalsendeempfangsvorrichtung empfangen wird, indem es die Signalsendevorrichtung in dem einen Pfad der Signalsendeempfangsvorrichtung so steuert, dass sie ein Signal sendet, und jeweils die Signalempfangsvorrichtung in jedem Pfad der Signalsendeempfangsvorrichtung so steuert, dass sie das Signal empfängt; und
ein erstes Verarbeitungsmodul (256), das so konfiguriert ist, dass es jeweils eine Phasendifferenz zwischen dem Phasenwert des durch jede Signalempfangsvorrichtung empfangenen Signals und einem Phasenwert eines durch jede der anderen Signalempfangsvorrichtungen empfangenen Signals bestimmt und jeweils die Phasendifferenz zu dem gemeinsam genutzten Sendeempfangsphasenverschiebungsmodul entsprechend jedem Pfad der Signalsendeempfangsvorrichtung kompensiert.

11. Vorrichtung zum Kalibrieren eines Sendekanals, das auf den Sendeempfänger nach einem der Ansprüche 1 bis 5 angewendet wird und umfasst:
ein zweites Einstellmodul (262), das so konfiguriert ist, dass es einen Dämpfungsbetrag für eine Signalempfangsvorrichtung in einem Pfad einer Signalsendeempfangsvorrichtung als 0 einstellt und Dämpfungsbeträge für Signalempfangsvorrichtungen in anderen Pfaden von Signalsendeempfangsvorrichtungen als einen unterstützten Maximalwert einstellt;
ein zweites Erfassungsmodul (264), das zum Erfassen von Phasenwerten von Signalen, die jeweils durch die Signalempfangsvorrichtung in dem einen Pfad der Signalsendeempfangsvorrichtung empfangen werden, durch jeweiliges Steuern einer Signalsendevorrichtung in jedem Pfad der Signalsendeempfangsvorrichtung, um ein Signal zu senden, und Steuern der Signalempfangsvorrichtung in dem einen Pfad der Signalsendeempfangsvorrichtung konfiguriert ist, um das Signal zu empfangen; und
ein zweites Verarbeitungsmodul (266), dass zum jeweiligen Bestimmen einer Phasendifferenz zwischen dem Phasenwert des Signals, das in einem Fall durch die Signalempfangsvorrichtung in dem einen Pfad der Signalsendeempfangsvorrichtung empfangen wird, und dem Phasenwert jedes der Signale, die in anderen Fällen durch die Signalempfangsvorrichtung in dem einen Pfad der Signalsendeempfangsvorrichtung empfangen werden, und entsprechenden Kompensieren der bestimmten Phasendifferenz für das gemeinsam genutzte Sendeempfangsphasenverschiebungsmodul konfiguriert ist, das jedem Pfad der Signalsendeempfangsvorrichtung entspricht.

12. Signalsendeempfangssystem, umfassend eine Antenne und einen oder mehrere Sendeempfänger nach einem der Ansprüche 1 bis 5, wobei der eine oder die mehreren Sendeempfänger mit der Antenne verbunden sind.

13. Signalsendeempfangssystem nach Anspruch 12, ferner umfassend ein Basisbandverarbeitungsmodul, wobei das Basisbandverarbeitungsmodul mit dem einen oder den mehreren Sendeempfängern verbunden ist.

14. Speichermedium, umfassend ein gespeichertes Programm, wobei das Programm, wenn es durch einen Computer ausgeführt wird, den Computer veranlasst, die Schritte des in einem der Ansprüche 6 bis 9 beanspruchten Verfahrens auszuführen.

15. Elektronische Vorrichtung, umfassend einen Speicher, einen Prozessor und ein Computerprogramm, das in dem Speicher gespeichert ist und durch den Prozessor ausführbar ist, wobei der Prozessor das Verfahren nach einem der Ansprüche 6 bis 9 durch Ausführen des Computerprogramms durchführt.

## Revendications

1. Émetteur-récepteur, comprenant un module de division de puissance et au moins deux trajets de dispositifs d'émission-réception et de traitement de signal, chaque trajet de dispositif d'émission-réception et de traitement de signal comprenant un module d'atténuation partagé d'émission-réception, un module de déphasage partagé d'émission-réception et un module de traitement frontal d'émission-réception, dans lequel
le module d'atténuation partagé d'émission-réception est connecté au module de division de puissance, et est configuré pour atténuer un signal reçu ou à transmettre ;
le module de déphasage partagé d'émission-réception est connecté au module d'atténuation partagé d'émission-réception, et est configuré pour ajuster une phase du signal reçu ou à transmettre ; et
une extrémité du module de traitement frontal d'émission-réception est connectée au module de déphasage partagé d'émission-réception, et l'autre extrémité du module de traitement frontal d'émission-réception est configurée pour être connectée à une antenne pour recevoir ou transmettre un signal ;
dans lequel l'émetteur-récepteur comprend en outre un appareil pour étalonner un canal de réception, et l'appareil comprend :
un premier module de réglage (252), configuré pour régler une quantité d'atténuation pour un dispositif de transmission de signal dans un trajet de dispositif d'émission-réception de signal à 0, et régler des quantités d'atténuation pour des dispositifs de transmission de signal dans d'autres trajets de dispositifs d'émission-réception de signal à une valeur prise en charge maximale ;
un premier module d'acquisition (254), configuré pour acquérir une valeur de phase d'un signal reçu par un dispositif de réception de signal dans chaque trajet de dispositif d'émission-réception de signal en commandant au dispositif de transmission de signal dans le trajet de dispositif d'émission-réception de signal de transmettre un signal et en commandant respectivement au dispositif de réception de signal dans chaque trajet de dispositif d'émission-réception de signal de recevoir le signal ; et
un premier module de traitement (256), configuré pour déterminer respectivement une différence de phase entre la valeur de phase du signal reçu par chaque dispositif de réception de signal et une valeur de phase d'un signal reçu par chacun des autres dispositifs de réception de signal, et respectivement compenser la différence de phase par rapport au module de déphasage partagé d'émission-réception correspondant à chaque trajet de dispositif d'émission-réception de signal.

2. Émetteur-récepteur selon la revendication 1, comprenant en outre un module de traitement, de filtrage et de conversion fréquence de fréquence intermédiaire de réception, un module de traitement, de filtrage et de conversion de fréquence de fréquence intermédiaire de transmission, un module d'oscillation locale, un commutateur de décalage d'émission-réception, et un module de filtrage partagé d'émission-réception, dans lequel
le module de traitement, de filtrage et de conversion de fréquence de fréquence intermédiaire de réception est configuré pour être connecté à un module de traitement en bande de base ;
le module de traitement, de filtrage et de conversion de fréquence de fréquence intermédiaire de transmission est configuré pour être connecté au module de traitement en bande de base ;
le module d'oscillation locale est connecté au module de traitement, de filtrage et de conversion de fréquence de fréquence intermédiaire de réception et au module de traitement, de filtrage et de conversion de fréquence de fréquence intermédiaire de réception de transmission ;
le module de décalage d'émission-réception est connecté au module de traitement, de filtrage et de conversion de fréquence de fréquence intermédiaire de réception et au module de traitement, de filtrage et de conversion de fréquence de fréquence intermédiaire de transmission ; et
une extrémité du module de filtrage partagé d'émission-réception est connectée au commutateur de décalage d'émission-réception, et l'autre extrémité du module de filtrage partagé d'émission-réception est connectée au module de division de puissance.

3. Émetteur-récepteur selon la revendication 2, dans lequel le module de traitement, de filtrage et de conversion de fréquence de fréquence intermédiaire de réception comprend un module de réglage de gain de fréquence intermédiaire de réception, un convertisseur abaisseur de fréquence de réception, un module de filtrage de réception et un démodulateur de réception ;
le module de réglage de gain de fréquence intermédiaire de réception est configuré pour être connecté au module de traitement en bande de base ;
le convertisseur abaisseur de réception est connecté au module de réglage de gain de fréquence intermédiaire de réception, et est configuré pour effectuer une conversion de fréquence sur le signal reçu d'une fréquence intermédiaire haute (HIF) à une fréquence intermédiaire basse (LIF) ;
le module de filtrage de réception est connecté au convertisseur abaisseur de réception ; et
le démodulateur de réception est connecté au module de filtrage de réception.

4. Émetteur-récepteur selon la revendication 2, dans lequel le module de traitement, de filtrage et de conversion de fréquence de fréquence intermédiaire de transmission comprend un module de réglage de gain de fréquence intermédiaire de transmission, un module démodulateur de transmission, un module de filtrage de transmission et un convertisseur élévateur de transmission ;
le module de réglage de gain de fréquence intermédiaire de transmission est configuré pour être connecté au module de traitement en bande de base ;
le module démodulateur de transmission est connecté au module de réglage de gain de fréquence intermédiaire de transmission, et est configuré pour effectuer une conversion de fréquence d'une fréquence intermédiaire basse, LIF, à une fréquence intermédiaire haute, HIF, sur le signal à transmettre ;
le module de filtrage de transmission est connecté au module démodulateur de transmission ; et
le convertisseur élévateur de transmission est connecté au module de filtrage de transmission.

5. Émetteur-récepteur selon l'une quelconque des revendications 1 à 4, dans lequel le module de déphasage partagé d'émission-réception adopte une structure passive.

6. Procédé d'étalonnage d'un canal de réception, appliqué à l'émetteur-récepteur selon l'une quelconque des revendications 1 à 5, et comprenant :
un réglage d'une quantité d'atténuation pour un dispositif de transmission de signal dans un trajet de dispositif d'émission-réception de signal à 0, et un réglage de quantités d'atténuation pour des dispositifs de transmission de signal dans d'autres trajets de dispositifs d'émission-réception de signal à une valeur prise en charge maximale (S702) ;
une acquisition d'une valeur de phase d'un signal reçu par un dispositif de réception de signal dans chaque trajet de dispositif d'émission-réception de signal en commandant au dispositif de transmission de signal dans le trajet de dispositif d'émission-réception de signal de transmettre un signal et en commandant respectivement au dispositif de réception de signal dans chaque trajet de dispositif d'émission-réception de signal de recevoir le signal (S704) ; et
une détermination respective d'une différence de phase entre la valeur de phase du signal reçu par chaque dispositif de réception de signal et une valeur de phase d'un signal reçu par chacun des autres dispositifs de réception de signal, et une compensation respective de la différence de phase par rapport au module de déphasage partagé d'émission-réception correspondant à chaque trajet de dispositif d'émission-réception de signal (S706).

7. Procédé d'étalonnage du canal de réception selon la revendication 6, dans lequel une acquisition de la valeur de phase du signal reçu par le dispositif de réception de signal dans chaque trajet de dispositif d'émission-réception de signal en commandant au dispositif d'émission de signal dans le trajet de dispositif d'émission-réception de signal de transmettre le signal et en commandant respectivement au dispositif de réception de signal dans chaque trajet de dispositif d'émission-réception de signal de recevoir le signal (S704) comprend :
une commande au dispositif de transmission de signal dans le trajet de dispositif d'émission-réception de signal de transmettre le signal ; et
une exécution de manière répétée des opérations suivantes jusqu'à ce que les valeurs de phase de signaux reçus par des dispositifs de réception de signal dans tous les trajets de dispositifs d'émission-réception de signal soient acquises :
un réglage d'une quantité d'atténuation pour un module de traitement frontal du dispositif de réception de signal dans le trajet de dispositif d'émission-réception de signal à 0 pour recevoir un signal, et un enregistrement de la valeur de phase du signal reçu ; et
un réglage de la quantité d'atténuation pour le module de traitement frontal du dispositif de réception de signal dans l'un des trajets du dispositif d'émission-réception de signal à une valeur prise en charge maximale, un réglage d'une quantité d'atténuation pour un module de traitement frontal d'un dispositif de réception de signal dans un autre trajet de dispositif d'émission-réception de signal à l'exception du trajet de dispositif d'émission-réception de signal à 0 pour recevoir un signal, et un enregistrement de la valeur de phase du signal reçu.

8. Procédé d'étalonnage d'un canal d'émission, appliqué à l'émetteur-récepteur selon l'une quelconque des revendications 1 à 5, et comprenant :
un réglage d'une quantité d'atténuation pour un dispositif de réception de signal dans un trajet de dispositif d'émission-réception de signal à 0, et un réglage de quantités d'atténuation pour des dispositifs de réception de signal dans d'autres trajets de dispositifs d'émission-réception de signal à une valeur prise en charge maximale (S 1002) ;
une acquisition de valeurs de phase de signaux respectivement reçus par le dispositif de réception de signal dans l'un des trajets de dispositif d'émission-réception de signal en commandant respectivement un dispositif de transmission de signal dans chaque trajet du dispositif d'émission-réception de signal pour transmettre un signal et en commandant au dispositif de réception de signal dans le trajet de dispositif d'émission-réception de signal de recevoir le signal (S 1004) ; et
une détermination respective d'une différence de phase entre la valeur de phase du signal reçu dans un cas par le dispositif de réception de signal dans le trajet de dispositif d'émission-réception de signal et la valeur de phase de chacun des signaux reçus dans d'autres cas par le dispositif de réception de signal dans le trajet de dispositif d'émission-réception de signal, et une compensation correspondante de la différence de phase déterminée par rapport au module de déphasage partagé d'émission-réception correspondant à chaque trajet de dispositif d'émission-réception de signal (S 1006).

9. Procédé d'étalonnage du canal de transmission selon la revendication 8, dans lequel une acquisition des valeurs de phase des signaux respectivement reçus par le dispositif de réception de signal dans le trajet de dispositif d'émission-réception de signal en commandant respectivement au dispositif de transmission de signal dans chaque trajet de dispositif d'émission-réception de signal de transmettre le signal et une commande au dispositif de réception de signal dans l'un trajet du dispositif d'émission-réception de signal de recevoir le signal (S 1004) comprend :
un réglage d'une quantité d'atténuation pour un module de traitement frontal du dispositif de transmission de signal dans le trajet de dispositif d'émission-réception de signal à 0 pour transmettre le signal ; et
une exécution de manière répétée des opérations suivantes jusqu'à ce que des valeurs de phase de tous les signaux respectivement reçus par le dispositif de réception de signal dans le trajet de dispositif d'émission-réception de signal soient acquises :
une commande au dispositif de réception de signal dans le trajet de dispositif d'émission-réception de signal de recevoir un signal et un enregistrement de la valeur de phase du signal reçu ; et
un réglage de la quantité d'atténuation pour le module de traitement frontal du dispositif de transmission de signal dans le trajet de dispositif d'émission-réception de signal à une valeur prise en charge maximale, un réglage d'une quantité d'atténuation pour un module de traitement frontal d'un dispositif de transmission de signal dans un autre trajet de dispositif d'émission-réception de signal à l'exception de l'un des trajets de dispositif d'émission-réception de signal à 0 pour transmettre un signal, une commande au dispositif de réception de signal dans le trajet de dispositif d'émission-réception de signal de recevoir le signal et un enregistrement de la valeur de phase du signal reçu.

10. Appareil d'étalonnage d'un canal de réception, appliqué à l'émetteur-récepteur selon l'une quelconque des revendications 1 à 5, et comprenant :
un premier module de réglage (252), configuré pour régler une quantité d'atténuation pour un dispositif de transmission de signal dans un trajet de dispositif d'émission-réception de signal à 0, et régler des quantités d'atténuation pour des dispositifs de transmission de signal dans d'autres trajets de dispositifs d'émission-réception de signal à une valeur prise en charge maximale ;
un premier module d'acquisition (254), configuré pour acquérir une valeur de phase d'un signal reçu par un dispositif de réception de signal dans chaque trajet de dispositif d'émission-réception de signal en commandant au dispositif de transmission de signal dans le trajet de dispositif d'émission-réception de signal de transmettre un signal et en commandant respectivement au dispositif de réception de signal dans chaque trajet de dispositif d'émission-réception de signal de recevoir le signal ; et
un premier module de traitement (256), configuré pour déterminer respectivement une différence de phase entre la valeur de phase du signal reçu par chaque dispositif de réception de signal et une valeur de phase d'un signal reçu par chacun des autres dispositifs de réception de signal, et respectivement compenser la différence de phase par rapport au module de déphasage partagé d'émission-réception correspondant à chaque trajet de dispositif d'émission-réception de signal.

11. Appareil d'étalonnage d'un canal de transmission, appliqué à l'émetteur-récepteur selon l'une quelconque des revendications 1 à 5, et comprenant :
un second module de réglage (262), configuré pour régler une quantité d'atténuation pour un dispositif de transmission de signal dans un trajet de dispositif d'émission-réception de signal à 0, et régler des quantités d'atténuation pour des dispositifs de transmission de signal dans d'autres trajets de dispositifs d'émission-réception de signal à une valeur prise en charge maximale ;
un second module d'acquisition (264), configuré pour acquérir des valeurs de phase de signaux respectivement reçus par le dispositif de réception de signal dans l'un des trajets de dispositif d'émission-réception de signal en commandant respectivement au dispositif de transmission de signal dans chaque trajet de dispositif d'émission-réception de signal pour transmettre un signal et en commandant au dispositif de réception de signal dans le trajet de dispositif d'émission-réception de signal de recevoir le signal ; et
un second module de traitement (266), configuré pour déterminer de manière respective une différence de phase entre la valeur de phase du signal reçu dans un cas par le dispositif de réception de signal dans le trajet de dispositif d'émission-réception de signal et la valeur de phase de chacun des signaux reçus dans d'autres cas par le dispositif de réception de signal dans le trajet de dispositif d'émission-réception de signal, et compenser de manière correspondante la différence de phase déterminée par rapport au module de déphasage partagé d'émission-réception correspondant à chaque trajet de dispositif d'émission-réception de signal.

12. Système d'émission-réception de signal, comprenant une antenne et un ou plusieurs émetteurs-récepteurs selon l'une quelconque des revendications 1 à 5, dans lequel les un ou plusieurs émetteurs-récepteurs sont connectés à l'antenne.

13. Système d'émission-réception de signal selon la revendication 12, comprenant en outre un module de traitement en bande de base, dans lequel le module de traitement en bande de base est connecté aux un ou plusieurs émetteurs-récepteurs.

14. Support de stockage, comprenant un programme stocké, dans lequel le programme, lorsqu'il est exécuté par un ordinateur, amène l'ordinateur à réaliser les étapes du procédé selon l'une quelconque des revendications 6 à 9.

15. Appareil électronique, comprenant une mémoire, un processeur et un programme informatique stocké dans la mémoire et pouvant être exécuté sur le processeur, dans lequel le processeur réalise le procédé selon l'une quelconque des revendications 6 à 9 en exécutant le programme informatique.
